**Europäisches Patentamt**

(19) **European Patent Office**

**Office européen des brevets**

(11) Publication number: **0 037 579.**

**B1**

(12) **EUROPEAN PATENT SPECIFICATION**

(45) Date of publication of patent specification: **20.08.86**

(21) Application number: **81102621.0**

(22) Date of filing: **07.04.81**

(51) Int. Cl.⁴: **G 05 B 13/04**

(54) Adaptive-predictive control method and adaptive-predictive control system.

(30) Priority: **07.04.80 US 138001**
**30.03.81 US 249230**

(43) Date of publication of application:
**14.10.81 Bulletin 81/41**

(45) Publication of the grant of the patent:
**20.08.86 Bulletin 86/34**

(84) Designated Contracting States:
**AT BE CH DE FR GB IT LI LU NL SE**

(56) References cited:
**FR-A-2 360 928**

**PROCEEDINGS OF THE INTERNATIONAL
FEDERATION OF AUTOMATIC CONTROL, proc.
6, 6th World Congress, Boston, August 24-30,
1975, part I; Theory, Pittsburg, US B.
COURTIOL: "Applying model reference
adaptive techniques for the control of
electromechanical systems", pages 58.2.1 to
58.2.9**

**IEEE TRANSACTIONS ON AUTOMATIC
CONTROL, vol AC-19 no.6, December
1974,New York,US.G.LUDERS et al. "Stable
adaptive schemes for state estimation and
identification of linear systems" pages 841-847.**

(73) Proprietor: **Sanchez, Juan Martin**
**317 8515 112 Street**
**Edmonton Alberta T6G 1K7 (CA)**

(72) Inventor: **Sanchez, Juan Martin**
**317 8515 112 Street**
**Edmonton Alberta T6G 1K7 (CA)**

(74) Representative: **Feldkamp, Rainer, Dipl.-Ing.
et al**
**Patent Attorneys Dipl.-Ing. Curt Wallach Dipl.-
Ing. Günther Koch, Dr. Tino Haibach Dipl.-Ing.
Rainer Feldkamp Kaufinger Strasse 8
D-8000 München 2 (DE)**

(56) References cited:
**IEEE TRANSACTIONS ON AUTOMATIC
CONTROL, vol. AC-14, no. 5 October 1969, New
York, US F.D. POWELL: "Predictive adaptive
control" pages 550-552**

Courier Press, Leamington Spa, England.

# 0 037 579

## Description

The invention relates to a method for generating a control vector during each of a plurality of sampling instants k, said control vector to be applied to an apparatus which carries out a process having at least one input variable and at least one output variable, at least one of said input variables defining a process input vector, said apparatus varying said process input vector in accordance with the value of said control vector, said method comprising the steps of storing a model which is capable of predicting the dynamic value of a process output vector which vector is composed of at least one of said process output variables at predetermined future sampling instants, generating a desired process output vector at each of said sampling instants k, said desired dynamic process output vector being representative of a desired value of said process output vector at said predetermined future sampling instants k+r+1, r being the number of sampling time delays it takes the process to respond to a change in the process input vector, and generating at each of said sampling instants k that control vector which said model predicts will cause said dynamic process output vector to be equal to said desired dynamic process output vector at said future sampling instant k+r+1, as well as to a system for performing said method.

The invention is related to an adaptive control system for single-input single-output or multivariable time-variant processes with known or unknown parameters and with or without time delays. Such control systems are useful in many diverse fields such as aeronautics, electronics, chemical engineering, etc. Examples of processes in which the adaptive-predictive system has been applied are single-input single-output control of an aircraft where the pitch angle is controlled by elevator position, and the multivariable control of a distillation column where top and bottom compositions are controlled by reflux and steam flow rates.

It is known that the control performance of a system with a control system based on constant parameters deteriorates when the dynamic parameters of the process vary in an unforeseen way which is not capable of direct or indirect measurement. In recent years, control techniques have been developed to try to solve this problem, some of these techniques have been based on the model reference adaptive systems theory, which basically operates in one of the following ways: (1) performs a real time adaptive estimation of the parameters and state variables of the process, from which an adaptive regulator computes the control to be applied to the process, or (2) computes the control to be applied to the process through an adaptive control scheme in order to make the process output follow a model reference output. In general, in both of the above cases, the control structure requires the design of a corrector and the difficulties encountered in the computation of the parameters of this corrector as the order of the process increases, severely restricts the field of applications of these techniques.

The above considered techniques, as well as most of the adaptive or non-adaptive control techniques used so far in industry, are based in the traditional feedback methodology. According to this traditional methodology the control to be applied to the process is computed from the control error, defined as the difference between a setpoint value, which represents a desired value of the process output, and the process output. It is well known that this traditional feedback methodology has an inherent problem of instability due to the fact that, if the natural frequency of the controller-process system has a gain close to or larger than one, the resultant control system will be unstable, since according to the traditional methodology the process output is inverted and added to the controller input.

Continuous-time control techniques, previous to the present invention, tried to predict a control error trajectory, and generate a control signal to minimize the integrated predicted control error over a certain interval of prediction. The practical implementation using this kind of approach resulted in continuous linear systems, whose basic structure was closely related to the traditional feedback methodology, since the control signal was directly computed from the difference between the setpoint and the process output.

Other adaptive techniques, named self-tuning regulators and self-timing controllers, try to minimize under certain assumptions the variance of the process output or the variance of an extended process output. It can also be said that the self-tuning controllers try to minimize, under certain assumptions, the expected value of a function of the squared process output and the squared control signal or incremental control signal multiplied by a weighting factor. In practical applications, the choice of this weighting factor can be critical, and determines the stability and performance of the control system.

Finally, adaptive systems that consider the computations of the control signal at each sampling or control instant through the minimization of an index, which requires the resolution of a Ricatti equation, have the important practical drawback of the amount and complexity of computations involved in the resolution of the mentioned equation.

The present invention is an extension of a previously disclosed adaptive-predictive control system, as indicated in FR—A—2,360,928. This extension overcomes the above pointed out difficulties of known control techniques, acting in a way different from the traditional feedback methodology and other predictive techniques, and that is briefly described in the following, pointing out the distinctive inventive feature in relation with said previous disclosure of the adaptive-predictive control system.

Brief description of the invention

The adaptive-predictive control system or methodology uses a digital computer (e.g. mini or microcomputer) to accomplish the adaptive control of single-input single-output or multivariable

2

time-variant processes with known or unknown parameters and with or without constant or variable time delays in such a way that the dynamic output vector of the process is predicted, using an adaptive-predictive model, and the control vector to be applied to the process is computed with the objective that the predicted dynamic process output vector becomes equal to the value of a desired dynamic output vector included in a desired process output trajectory. In said previously disclosed adaptive-predictive control system, the control vector at a certain sampling instant k is computed directly from the value of said desired dynamic process output trajectory at sampling instant k+r+1, where r represents the number of sampling time delays of the process, in such a way that the predicted process output at sampling instant k+r+1 becomes equal to said desired dynamic process output value at said same sampling instant k+r+1. The distinctive inventive feature of the present disclosure of the adaptive-predictive control system is that the control vector at sampling instant k is computed directly from the value of the desired dynamic process output trajectory at sampling instant k+r+1+λ, where λ is a positive integer, in such a way that the predicted value of the process output at sampling instant k+r+1+λ becomes equal to said desired dynamic process output value at said same sampling instant k+r+1+λ. The desired dynamic process output trajectory, between instants k+r+1 and k+r+1+λ, is easily defined by optimizing a criterion in which a future dynamic reference trajectory is considered. This control vector computation is done at every sampling or control instant by a number of simple and specific operations.

This distinctive feature of the present invention allows the adaptive-predictive control system to control satisfactorily processes which have an unstable-inverse nature, as shown below by the Experimental Example 2. The reason for this advantage is that the definition of the desired output trajectory based on a future value at sampling instant k+r+1+λ can make said desired output trajectory physically realizable, i.e. it can be followed by the process output without requiring an unbounded process input. It is well known that, when the process has an unstable-inverse nature, the process output cannot follow certain trajectories, since they would require unbounded inputs that are not physically realizable. Also, the distinctive feature of the present invention allows the adaptive-predictive control system to control satisfactorily processes with variable time delays. This advantage can briefly be explained as follows. If the interval of prediction is only the sampling instant k+r+1 and, for instance, the number of sampling time delays of the process becomes bigger than r, although the adaptive-predictive model can identify this variation in the process dynamics, the control vector applied to the process at sampling instant k will not have any effect on the process output at sampling instant k+r+1 and the adaptive-predictive control system will not operate satisfactorily. However, if the interval of prediction extends from k+r+1 to k+r+1+λ, then as long as the number of sampling time delays of the process is not larger than r+λ, the control vector at sampling instant k will have an effect on some of the process outputs in the interval of predicted outputs, and the adaptive-predictive control system will be able to operate satisfactorily.

Although the art of the previous disclosure of the adaptive-predictive control system, document FR—A—2,360,928, could be used in the control of processes with an unstable inverse nature, or with variable time delays, it would be necessary to increase the sampling period to face the instability problems presented by these types of processes. This increase in the sampling period would significantly deteriorate the control performance in many cases. Therefore, a significant advantage of the present invention is that it can overcome these instability problems without the need for increasing the sampling period and therefore without deteriorating the control performance.

An additional feature of the present invention is that the adaptive-predictive model can be updated at each sampling instant from the comparison of an estimated value of either an output vector, a control vector or a disturbance vector of the system being controlled, which vector is obtained with the use of the adaptive-predictive model, and the actual value of the corresponding output, control or disturbance vector. In the following description, the manner in which the adaptive-predictive model may be updated by comparing the estimated and actual value of the process output vector will be described first. Thereafter, the manner in which the model may be updated by comparing the estimated and actual values of a control or disturbance vector will also be described.

In the following detailed description of the invention, the adaptive-predictive control system is presented as an extension of the previously disclosed system (FR—A—2 360 928) in order to allow a better understanding of the invention.

Brief description of the drawings

For the purpose of illustrating the invention, there are shown in the drawings several embodiments which are presently preferred; it being understood, however, that this invention is not limited to the precise arrangements and instrumentalities shown.

Figure 1 shows the general and conceptual structure of the adaptive-predictive control system.

Figure 2 shows a distillation column on which the adaptive-predictive control system was implemented to carry out a multivariable control of the top and bottom compositions as outputs with reflux and steam flow rates as inputs.

Figure 3 shows results of one such experiment on the adaptive-predictive control of a distillation column.

Figure 4 shows a second embodiment of the adaptive-predictive control system of the present invention.

Figure 5 shows results of an experiment on the adaptive-predictive control of a single-input and single-output process with an unstable inverse.

Detailed description of the invention

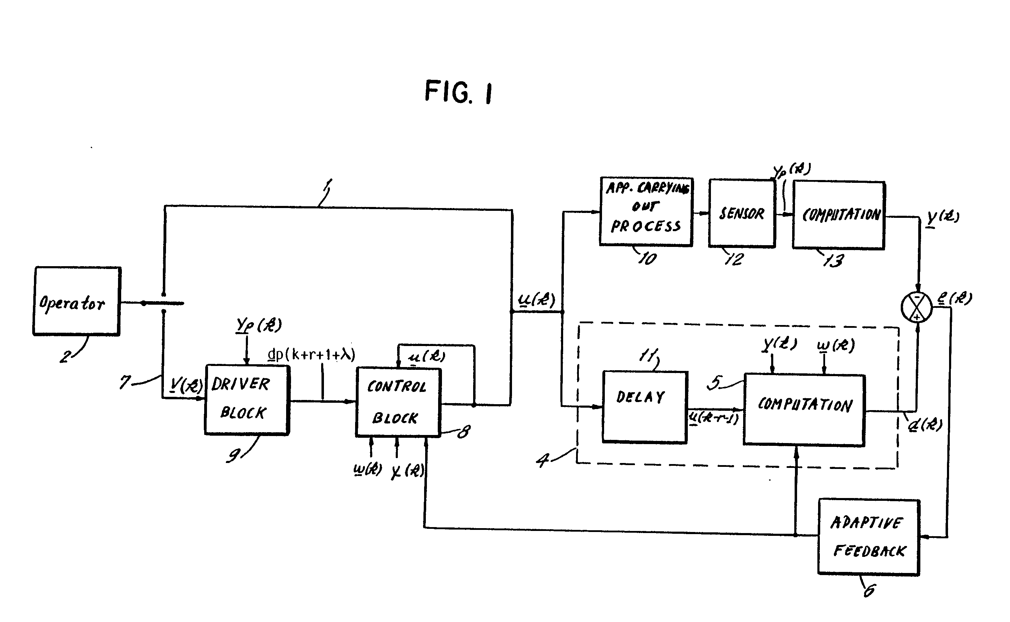

Referring now to the drawings, wherein like numerals indicate like elements, there is shown in Figure 1 a block diagram which provides a pictorial representation of both the apparatus carrying out the process being controlled and the control system which controls the operation of the apparatus. It should be recognized, however, that various elements of this diagram do not necessarily represent physically separate entities but rather indicate the different functions which are carried out by a single digital computer. Of course, since different elements of the computer combine to carry out the different functions of the process, each element in Figure 1 may properly be considered a separate means for carrying out the specified function.

At any sampling instant k, two modes of operation of the control system are possible; an identification mode and a control mode. Which mode is employed is determined by either a human or an automatic operator 2. In either case, the modes are as is shown in Figure 1:

1. Identification mode: In the identification mode, the control vector $u(k)$ is directly applied from the operator to both the apparatus 10 carrying out the process being controlled and the identification block 4 as shown by path 1. The identification block 4 uses an adaptive-predictive model stored in computation block 5 to compute a vector $d(k)$, which vector can be an estimation of either an incremental process output vector $y(k)$, an incremental control vector $u(k)$ or an incremental measurable disturbance vector $w(k)$. In a manner described below the adaptive-predictive model may be updated in adaptive feedback mechanism 6 from the comparison of said vector $d(k)$ and the actual value of the corresponding incremental output, control or disturbance vector, that the vector $d(k)$ estimates. Figure 1 shows the case in which the vector $d(k)$ estimates an incremental output vector $y(k)$ and is compared thereto.

2. Control mode: In this mode, the parameters of the adaptive-predictive model are updated as explained above. However, as shown by path 7, the control vector $u(k)$ to be applied to the apparatus 10 carrying out the process being controlled is computed by the control block 8. This computation of $u(k)$. requires a previous selection in driver block 9 of a desired trajectory of the process output vector between sampling instants $k+r+1$ and $k+r+1+\lambda$, wherein k represents the present sampling instant, r represents a number of sampling instants in the future corresponding to the number of sampling time delays observed in the process or conveniently considered for control purposes (i.e. the number of sampling instants it takes for the process to respond to a change in the control vector minus 1) and $\lambda$ represents a positive integer or zero. According to this nomenclature, $k+r+1$ represents $r+1$ sampling instants in the future while $k+r+1+\lambda$ represents $r+1+\lambda$ sampling instants in the future. Assuming that each sampling instant is, for example, two minutes apart, and that $r=3$ and $\lambda=1$, then the nomenclature $k+r+1$ represents that sampling instant which occurs eight minutes after the present sampling instant while the nomenclature $k+r+1+\lambda$ represents that sampling instant which occurs ten minutes in the future.

The desired process output trajectory is selected equal to that specific process output trajectory between sampling instants $k+r+1$ and $k+r+1+\lambda$, that the updated adaptive-predictive model used in identification block 4 predicts would be caused by a specific future control vector sequence between sampling instant k and $k+\lambda$, and such that the specific process output trajectory and the specific future control sequence optimize a chosen performance criterion in which a future reference trajectory is explicitly considered, said reference trajectory being periodically redefined as a function of the previously measured process output and evolving according to desired dynamics to the set point. Some examples of the chosen performance criterion and its optimization are set forth in detail in the description of operation (f) below. This chosen performance criterion is usually characterized by an index, and the optimization of the chosen performance criterion is obtained by minimizing the value of the index, which value can vary as a function of said future reference trajectory, the setpoint $v(k)$ set by the operator 2, the measured and predicted process output and input sequences, the control constraints and any other parameters or variables that may influence the control performance. Then, the computation of the control vector $u(k)$ in control block 8, set forth in some detail in the description of the operation (g) below, obtains the value of $u(k)$ which the adaptive-predictive model predicts will cause the process output to be equal to the value $d_p(k+r+1)$ of the desired process output control sequence that optimizes the chosen performance criterion and makes the predicted process output at sampling time $k+r+1+\lambda$ equal to the value of the desired process output trajectory at said sampling time $k+r+1+\lambda$.

To properly control the process being carried out by apparatus 10, the adaptive-predictive control system uses incremental values of the output, input and measurable disturbance vectors of the process. Additionally, the control vector can be conveniently limit checked. The specific operations that the control system will carry out at every sampling instant k during the control mode are described as follows:

a) Measurement by sensor 12, and, if it is considered convenient, filtering of the output variables of the process carried out by apparatus 10 to obtain the process output vector $y_p(k)$, the dimension of which is considered to be n.

The above considered filtering can be carried out by means of the well known filtering techniques presently available and/or through an appropriate weighted means between the measured values of said output variables and values of the output variables estimated using the adaptive-predictive model. The

4

adaptive-predictive model, and the way in which it is used for estimation, is considered in operation (c) below.

b) Computation of the incremental process output vector $y(k)$ (in computer block 13) by:

$$y(k)=y_p(k)-y_p(k-\gamma) \qquad (1)$$

where $\gamma$ is an integer that can be conveniently chosen. Each incremental process output vector $y(k)$ is the difference between the value of the process output vector in the present sampling instant and the value of the process output vector in a predetermined prior sampling instant. $\gamma$ represents the number of sampling periods between the present sampling instant and the predetermined prior sampling instant.

c) Computation (in identification block 4) of the estimated incremental process output vector $d(k)$ by the adaptive-predictive model, which can be defined by:

$$d(k)= \sum_{i=1}^{h} A_i(k-1)\, y(k-i-r_1)+ \sum_{i=1}^{f} B_i(k-1)\, u(k-i-r)+ \sum_{i=1}^{g} C_i(k-1)\, w(k-i-r_2) \qquad (2)$$

where the vectors $u(k-i-r)$ and $w(k-i-r_2)$ are obtained by:

$$u(k-i-r)=u_p(k-i-r)-u_p(k-i-r-\gamma) \qquad (3)$$

$$w(k-i-r_2)=w_p(k-i-r_2)-w_p(k-i-r_2-\gamma) \qquad (4)$$

where $u_p(k-i-r)$ and $w_p(k-i-r_2)$ are the control and the measurable disturbance vectors, respectively, of dimensions $n_1$ and $m$, at the sampling instants $k-i-r$ and $k-i-r_2$, respectively. In equation (2), the integers h, f and g can be conveniently chosen, and likewise the integers $r_1$ and $r_2$ can also be conveniently chosen, taking into account the available or forecasted measurements of the ouptut and disturbance vectors, respectively. The matrices $A_i(k-1)$, $B_i(k-1)$ and $C_i(k-1)$ of the adaptive-predictive model have appropriate dimensions and their values correspond to a past value before being updated at the instant k. If the dimension of the control vector is bigger than the dimension of the output vector then, in most of the cases, supplementary conditions should be added to obtain a unique control solution, or simply some of the control vector components can be included in the disturbance vector; as a particular case it will be considered that $n_1=n$. It must be understood that the measurable disturbance vector $w_p(k-i-r_2)$, or the incremental measurable disturbance vector $w(k-i-r_2)$, can be composed not only by variables which are usually considered as measurable disturbances, but by any kind of variable or functions of measurable variables that influence the process output vector at instant k. For instance, it can be considered that some of the components $w_{pj}(k)(j=1, g)$ of the vector $w_p(k)$ can be defined by:

$$w_{pj}(k)=\mu_{pm}(k) \cdot v_{p1}(k) \qquad (5)$$

where $\mu_{pm}(k)$ and $v_{p1}(k)$ are respectively the m and 1 components of two measurable vectors $\mu_p(k)$ and $v_p(k)$. As a particular case these two vectors could be chosen:

$$\mu_p(k)=u_p(k) \qquad (6)$$

$$v_p(k)=y_p(k) \qquad (7)$$

Analogous equalities to (5), (6) and (7) can be assumed, as another particular case, for the increments. $w(k)$, $u(k)$ and $y(k)$, of the previously considered vectors $w_p(k)$, $u_p(k)$ and $y_p(k)$. The above example shows that the adaptive-predictive model presented under the form of equation (2) can be the result of a practical transformation from a more general class of non-linear models. Therefore, the adaptive-predictive control system can be applied being the adaptive-predictive model under the form of equation (2) but taken as starting point a non-linear model of the previously considered more general class or any other kind of model able to be transformed in a model of the form presented in equation (2).

d) Computation of the incremental estimation error vector by:

$$e(k)=y(k)-d(k) \qquad (8)$$

e) Computation (in adaptive feedback mechanism 6) of the updated values at instant k of the parameters $a_{ijq}(k)$, $b_{ijq}(k)$ and $c_{ijq}(k)$, that are the elements in the jth row and qth column of the matrices $A_i(k)$, $B_i(k)$ and $C_i(k)$, respectively, by means of the following adaptive law:

$$a_{ijq}(k)=\beta_{aijq}(k)\ \alpha_j(k)\ e_j(k)\ y_q(k-i-r_1)+a_{ijq}(k-1) \qquad (9)$$

$$b_{ijq}(k)=\beta_{bijq}(k)\ \alpha_j(k)\ e_j(k)\ u_q(k-i-r)+b_{ijq}(k-1) \qquad (10)$$

$$c_{ijq}(k)=\beta_{cijq}(k)\ a_j(k)\ e_j(k)\ w_q(k-i-r_2)+c_{ijq}(k-1) \tag{11}$$

where $e_j(k)$, $y_q(k-i-r_1)$, $u_q(k-i-r)$ and $w_q(k-i-r_2)$ are the corresponding components of the vectors $e(k)$, $y(k-i-r_1)$, $u(k-i-r)$ and $w(k-i-r_2)$, respectively. $\beta_{aijq}(k)$, $\beta_{bijq}(k)$ and $\beta_{cijq}(k)$ and $a_j(k)$ are time-variant coefficients or functions that can be easily chosen among the wide range of possibilities that the well known gradient parameter, or least squares, identification techniques permit. One possible choice of these coefficients or functions can be the following:

$$a_j(k)=1/[1+\sum_{i=1}^{h}\sum_{q=1}^{n}\beta_{aijq}(k)\ y_q(k-i-r_1)^2+\sum_{i=1}^{f}\sum_{q=1}^{n}\beta_{bijq}(k)\ u_q(k-i-r)^2+\sum_{i=1}^{g}\sum_{q=1}^{m}\beta_{cijq}(k)\ w_q(k-i-r_2)^2] \tag{12}$$

$$\beta_{aijq}(k)=\beta_{aijqp}\,a_{ijq}(k-1)| \tag{13}$$

$$\beta_{bijq}(k)=\beta_{bijqp}\,b_{ijq}(k-1)| \tag{14}$$

$$\beta_{cijq}(k)=\beta_{cijqp}\,c_{ijq}(k-1)| \tag{15}$$

where $a_{ijq}(k-1)|$, $b_{ijq}(k-1)|$ and $c_{ijq}(k-1)|$ are the absolute values of the corresponding parameter values $a_{ijq}(k-1)$, $b_{ijq}(k-1)$ and $c_{ijq}(k-1)$; and $\beta_{aijqp}$, $\beta_{bijqp}$ and $\beta_{cijqp}$ are coefficients that can be conveniently chosen, for example, taking into account the expected variations of the previously mentioned corresponding parameters during the adaptive-predictive control system operations and the noises acting on the system.

f) Through a particular design of the driver block 9, when $\lambda=0$, the desired process output vector $d_p(k+r+1)$ and the desired increment process output vector $d_1(k+r+1)$ can be computed as follows:

1. Computation of the desired process output vector $d_p(k+r+1)$ of dimension $(n\times1)$ which can be done in various ways, such as using a model reference with desired dynamics or using any other design which will take into account the desired dynamics and also the previously measured or forecasted process outputs. An example of this last type of design can be defined by the following equation:

$$d_p(k+r+1)=\sum_{i=1}^{t}F_i\ y_p(k+r+1-r_1-i)+\sum_{i=1}^{s}H_i\ v(k+1-i) \tag{16}$$

where $y_p(k+r+1-r_1-i)$ and $v(k+1-i)$ are the process output vector and the driver block input vector at the sampling instant $k+r+1-r_1-i$ and $k+1-i$, respectively, $v(k+1-i)$ is a vector of dimension n, that is generated directly by the operator; and the matrices $F_i(i=1,t)$ and $H_j(j=1,s)$, as well as the integers t and s, can be chosen freely, to take into account the desired dynamics (i.e. to define the desired dynamics). An illustration of this choice is given in the Experimental Example 1 below.

2. From the value of the desired output vector of the process $d_p(k+r+1)$, the desired incremental output vector $d_1(k+r+1)$ can be easily computed or defined in various manners; a particular one, usually convenient when $\gamma>r$, is given by the following equation:

$$d_1(k+r+1)=d_p(k+r+1)-y_p(k+r+1-\gamma) \tag{17}$$

If found necessary the value of $d_1(k+r+1)$ can be limit checked.

The foregoing computations of the desired output vector $d_p(k+r+1)$ and the desired incremental output vector $d_1(k+r+1)$, can be performed by expressing the vectors $y_p(k+r+1-r_1-i)$, $v(k+1-i)$ and $y_p(k+r+1-\gamma)$ as increments with respect to a predetermined constant or time variant vector. If the time variant vector is chosen to be equal to the set point vector, $v(k)$, the solution of equation (16) can be simplified.

A more general design of the driver block 9 can be considered as follows:

At each sampling instant k, the driver block 9 selects a desired dynamic process output trajectory between sampling instants $k+r+1$ and $k+r+1+\lambda$, with $\lambda\geq0$, said desired trajectory being equal to a specific process output trajectory between sampling instants $k+r+1$ and $k+r+1+\lambda$, that the adaptive-predictive model predicts would be caused by a specific future sequence of control vectors between sampling instants k and $k+\lambda$, and such that the specific process output trajectory and the specific future control vector sequence optimize a chosen performance criterion in which a future reference trajectory is explicitly considered, said reference trajectory being periodically redefined as a function of the previously measured process output and evolving according to desired dynamics to the set point. The optimization can be obtained through the minimization of a certain index, I, which characterizes the selected performance criterion.

By way of example, the index I may vary as a function of the difference between said future reference trajectory and a process output trajectory between instants $k+r+1$ and $k+r+1+\lambda$, that the adaptive-

predictive model predicts would be caused by a future control sequence between instants k and k+λ, and also as a function of the future control sequence:

$$I = \sum_{h=k+r+1}^{k+r+1+\lambda} [y_p'(h)-y_r(h)]'\, M(h-k)[y_p'(h)-y_r(h)] + \sum_{h=k}^{k+\lambda} [u_p'(h)-u'_p(h-\sigma)]'\, N(h-k)[u'_p(h)-u'_p(h-\sigma)]$$

$$(18)$$

wherein $y'_p(h)$ and $u'_p(h)$ are the values of the predicted output trajectory and of the corresponding sequence of control vectors, respectively, $M(h-k)$ and $N(h-k)$ are non-negative real matrices which may be conveniently chosen and which serve as weighted coefficients for the vector multiplication, $\sigma$ is an integer that can be conveniently chosen, and reference trajectory $y_r(h)$ can be defined by:

$$y_r(h) = \sum_{i=1}^{t} F_i y_r(h-i) - \sum_{i=1}^{s} H_i v(h-i-r) \qquad (18A)$$

$$h = k+1,\ k+r+1+\lambda$$

where:

$$y_r(h) = y_p(h)$$

$$\cdot\ (18B)$$

$$h = k+1-t, k$$

$$v(h) = v(k)$$

$$(18C)$$

$$h = k+1,\ k+\lambda$$

and

$$u'_p(h-\sigma) = u_p(h-\sigma)$$

$$(18D)$$

$$h = k,\ k+\sigma-1$$

The way in which the adaptive-predictive control system uses this index as original in control theory because it considers the predicted output and input sequences and takes explicity into account a desired dynamic behavior of the process output, through the consideration of a reference trajectory, which is redefined at every instant k as a function of the previously measured process output. The desired dynamics are defined by $F_i$ and $H_i$ in Equation (18A).

If this index is minimized, the difference between the desired output trajectory and the reference trajectory which takes into account the desired dynamics will be minimized and the size of the predicted incremental control vector will also be minimized. This will result in a more stable control. Such stability is particularly desirable in applications where the process behaves as a non-minimum phase system, which would require large or unbounded controls in order to cause the process output to follow a reference trajectory having the desired dynamics.

In the adaptive predictive control system of the present invention, this general index can be minimized through the use of the well known optimization techniques presently available. In the following, second and third examples of indices, which are particular cases of the previously considered one and significantly simplify the computation requirements, are presented.

A second example of an index I which may be used is as follows:

$$I = y'_p(k+r+1) - \sum_{i=1}^{t} F_i y_p(k+r+1-r_1-i) - \sum_{i=1}^{s} H_i v(k+1-i) \qquad (19)$$

wherein $u_p(k)$ is included in $U^n$ and $u(k)$ is included in $U_i^n$ and $U^n$ and $U_i^n$ are respectively the domains of control vectors and incremental control vectors compatible with the control constraints. Note that this second example of index is a particular case of the first one in which λ is equal to zero, N(0) is also identical to zero, the reference trajectory at k+r+1, $y_r(k+r+1)$, is defined by the right hand side of equation (16), and control constraints are taken into consideration. It can also be observed that, in the case of the absence of control constraints, the minimization of the index defined by (19) will lead to a driver block equivalent to the one defined by equation (16). The computation of the control vector $u(k)$ which minimizes index (19) is considered in the description of operation (g) below.

A third particular example of an index which may be used is as follows:

7

$$I = [y'_p(k+r+1+\lambda) - y_r(k+r+1+\lambda)]' \; M(r+1+\lambda)[y'_p(k+r+1+\lambda) -$$

$$y_r(k+r+1+\lambda)] + \sum_{h=k+1}^{k+\lambda} [u'_p(h) - u'_p(h-1)]' \; N(h-k)[u'_p(h) - u'_p(h-1)] \qquad (20)$$

where $\lambda$ is a positive integer conveniently chosen and $y_r(k+r+1+\lambda)$ can be defined by an equation such as (18A).

The index defined by equation (20) will be minimized if the future predicted control sequence from instant k to instant $k+\lambda$ is constant, and the value $y'_p(k+r+1+\lambda)$ of the predicted output trajectory is equal to the value of the reference trajectory $y_r(k+r+1+\lambda)$; that is to say:

$$u'_p(h) = u'_p(h-1) \; h = k+1, \; k+\lambda \qquad (21)$$

$$y'_p(k+r+1+\lambda) = y_r(k+r+1+\lambda) \qquad (22)$$

Consequently, the vector of the desired output trajectory at $k+r+1+\lambda$, $d_p(k+r+1+\lambda)$, will be given by:

$$d_p(k+r+1+\lambda) = y_r(k+r+1+\lambda) \qquad (23)$$

This index is a particular case of the first considered index in which all the M(h−k) expect M(r+1+) are identical to zero, all the N(h−k) are positive definite except N(0) which is identical to zero, $\sigma$ is equal to 1 and $\lambda$ is a positive integer.

From the value of the desired output vector of the process $d_p(k+r+1+\lambda)$, the desired incremental output vector $d_1(k+r+1+\lambda)$, with $\lambda > 0$, can be computed or defined in various manners, a particular one usually convenient when $\gamma > r + \lambda$ is given by the following equation:

$$d_1(k+r+1+\lambda) = d_p(k+r+1+\lambda) - y_p(k+r+1+\lambda-\gamma) \qquad (24)$$

The explicit computation of $u_p(k)$, considered in operation (g) below can in this case be performed from $d_1(k+r+1+\lambda)$, taking into account conditions (21), which minimize the index defined by equation (20). In almost all cases, it is convenient to limit check the desired increment $d_1(k+r+1+\lambda)$. An illustrative experimental sample of this kind of driver block is presented below under experimental example 2.

While three examples of desirable indices are shown, it should be recognized that the index can be selected as a function of the reference trajectory, the setpoint, the measured and predicted output and input sequences, the control constraints, and any other parameters or variables that may influence the control performance.

g) The computation of the control vector in control block 8 is intimately related to the above considered operation (f). In fact operation (f) determines at least implicitly the value of the control vector at instant k, since the control vector corresponds to the value at instant k of the predicted control sequence that minimizes the index defined in operation (f). This is equivalent to say that the control vector at instant k is the one that makes the predicted process output at instant $k+r+1$ equal to the value of the desired process output trajectory at the same future instant $k+r+1$. Therefore, in general, the explicit computation of the control vector at instant k can be made, using the adaptive-predictive model, from the value of the desired output trajectory at instant $k+r+1$, $d_p(k+r+1)$. Particularly, in the case in which the performance index is defined by (19), and integers $\gamma$, $r_1$ and $r_2$ are chosen such that $\gamma > r$, $r_1 \geq r$ and $r_2 \geq r$, the considered explicit computation may be carried out according to the following:

1. The predicted incremental process output vector $y'(k+r+1)$ at the sampling instant $k+r+1$, is defined by:

$$y'(k+r+1) = y'_p(k+r+1) - y_p(k+r+1-\gamma) \qquad (25)$$

From the updated adaptive-predictive model (updated by the output of adaptive feedback mechanism 6), the predicted incremental process output vector $y'(k+r+1)$ will depend upon the incremental control vector $u(k)$, and is given by the equation:

$$y'(k+r+1) = \sum_{i=1}^{h} A_i(k) \; y(k+r+1-r_1-i) + \sum_{i=1}^{f} B_i(k) \; u(k+1-i) + \sum_{i=1}^{g} C_i(k) \; w(k+r+1-r_2-1) \qquad (26)$$

2. The value of the control vector which minimizes the index defined by (19), can be obtained, appropriately limit checking the value of the control vector which minimizes index (19) in the absence of control constraints. In this last case of absence of control constraints, the value of the desired output trajectory at instant $k+r+1$, $d_p(k+r+1)$, is given by equation (16), the corresponding desired increment

$d_1(k+r+1)$ by equation (17), and the incremental control vector $u(k)$ which makes the predicted incremental process output vector $y'(k+r+1)$ equal to $d_1(k+r+1)$, i.e. $y'_p(k+r+1)=d_p(k+r+1)$, is given by:

$$u(k) = B_1(k)^{-1}d_1(k+r+1)-B_1(k)^{-1} \sum_{i=2}^{f} B_i(k)\ u(k+1-i)$$

$$-B_1(k)^{-1} \sum_{i=1}^{h} A_i(k)\ y(k+r+1-r_1-i)$$

$$-B_1(k)^{-1} \sum_{i=1}^{g} C_i(k)\ w(k+r+1-r_2-i) \qquad (27)$$

In the case in which the control vector must verify conditions such as the ones expressed by equations (5), (6) and (7), these conditions will be taken into account in the computation of $u(k)$ by equation (27). The value of $u_p(k)$, which minimizes index (19) in the absence of control constraints, can be obtained, from the value of $u(k)$ computed by equation (27), by means of the equation:

$$u_p(k)=u(k)+u_p(k-\gamma) \qquad (28)$$

The value of $u_p(k)$ that minimizes index (19) can be finally obtained by appropriately limit checking the absolute and incremental value of $u_p(k)$ previously obtained by equation (28). It can be noted that, in this case, the computation of $u_p(k)$ does not require an explicit computation of the value at instant $k+r+1$ of the desired output trajectory which minimizes index (19).

In the case in which the index considered in operation (f) is the one defined by equation (20), and integers $\gamma$, $r_1$ and $r_2$ are chosen such that $\gamma > r+\lambda$, $r_1 \geqslant r+\lambda$ and $r_2 \geqslant r+\lambda$, the computation of $u(k)$, and therefore the computation of $u_p(k)$, can be performed from the desired incremental value $d_1(k+r+1+\lambda)$, defined by equation (24), according to the following:

1. The predicted incremental process output vector $y'(k+r+1)$ can be defined by:

$$y'(k+r+1+\lambda)=y'_p(k+r+1+\lambda)-y_p(k+r+1+\lambda-\gamma) \qquad (29)$$

From the updated adaptive-predictive model, the predicted incremental process output vector $y'(k+r+1+\lambda)$ will depend upon the incremental control vector $u(k)$, and is given by the equation:

$$y'(k+r+1+\lambda)= \sum_{i=1}^{h} A_i(k)\ y(k+r+1+\lambda-r_1-i)$$

$$+ \sum_{i=1}^{f} B_i(k)\ u(k+1+\lambda-i)$$

$$+ \sum_{i=1}^{g} C_i(k)\ w(k+r+1+\lambda-r_2-i) \qquad (30)$$

Taking into account equations (3) and (28), and conditions (21), equation (30) can be written in the form:

$$y'(k+r+1+\lambda)= \sum_{i=1}^{h} A_i(k)\ y(k+r+1+\lambda-r_1-i)$$

$$+ \sum_{i=1}^{g} C_i(k)\ w(k+r+1+\lambda-r_2-i)$$

$$+ \sum_{i=1}^{f'} B_i(k)\ (u(k)+u_p(k-\gamma)-u_p(k+1+\lambda-i-\gamma))$$

$$+ \sum_{i=\lambda+2}^{f} B_i(k)\ u(k+1+\lambda-i) \qquad (31)$$

In equation (31), when f is bigger than $\lambda$, f' will be equal to $\lambda+1$, and when f is less or equal to $\lambda$, f' will be equal to f and then the last summation of the right hand side of this equation will not appear.

2. The incremental control vector $u(k)$ is computed in this case by making the predicted incremental process output vector $y'(k+r+1+\lambda)$ equal to the desired incremental output $d_1(k+r+1+\lambda)$, and is given by:

$$u(k)=(\sum_{i=1}^{\lambda+1} B_i(k))^{-1} \, [d_1(k+r+1+\lambda)- \sum_{i=1}^{h} A_i(k)y(k+r+1+\lambda-r_1-i)$$

$$- \sum_{i=1}^{g} C_i(k)w(k+r+1+\lambda-r_2-i)$$

$$- \sum_{i=1}^{f'} B_i(k)(u_p(k-\gamma)-u_p(k+1+\lambda-i-\gamma))$$

$$- \sum_{i=\lambda+2}^{f} B_i(k)u(k+1+\lambda-i)] \tag{32}$$

The value of f' and the last summation in the brackets of equation (32), are as previously considered in equation (31).

In the case in which the control vector must verify conditions such as the ones expressed by equations (5), (6) and (7), these conditions will be taken into account in the computation of $u(k)$ by equation (32).

The value of $u_p(k)$ that minimizes (20) can be obtained, from the value of $u(k)$ computed by equation (32), by means of equation (28).

The previously considered computations of the control vector are illustrated below under Experimental Examples 1 and 2, respectively.

In the above two examples of minimizations of an index, it has been considered that integer $\gamma$, $r_1$ and $r_2$ are chosen such that $\gamma>r+\lambda$, $r_1 \geqslant r+\lambda$ and $r_2 \geqslant r+\lambda$, being $\lambda \geqslant 0$. This choice allows the computation of the control vector directly from a desired value of the process output and other previously measured process output, input and measurable disturbance vectors, using the adaptive-predictive model. In general, integers $\gamma$, $r_1$ and $r_2$ can be chosen such that $\gamma \geqslant 1$, $r_1 \leqslant 0$ and $r_2 \leqslant 0$. However, in the case in which $\gamma \geqslant r+\lambda$ or $r_1<r+\lambda$ or $r_2<r+\lambda$, the previously considered equations (25), (26), (29), (30) and (31) are still valid considering that the values or incremental values of the process output, input and measurable disturbance vectors contained in these equations and not measured yet at instant k, must be substituted by their corresponding predicted or estimated values. Therefore, in this case, the computation of the control vector, which will make $y'_p(k+r+1+\lambda)=d_1(k+r+1+\lambda)$, $\lambda \geqslant 0$, must take into account, using appropriately the adaptive-predictive model, the intermediate computation of said predicted or estimated values. In addition, the computation of the control vector will have to satisfy conditions such as (5), (6) and (7), if they exist. This manner of computing $u(k)$ does not present conceptual or practical difficulties and it is used in the program example set forth below.

In the case which considers the performance index as a general function of the reference trajectory, the setpoint, the measured and predicted output and input sequences, the control constraints and any other parameters or variables that may influence the control performance, the predicted process output and input sequences that minimize the considered index, and consequently the control to be applied at instant k, can be obtained using optimization techniques nowadays available or any other kind of practical optimization technique.

h) In most cases, the control vector $u_p(k)$ and its increments will be conveniently limit checked before being applied to the process.

In its implementation, the adaptive-predictive control system can use incremental input, output and disturbance vectors as described in the above operations. An alternative method of implementing the system is to compute the incremental input, output and disturbance vectors with respect to some constant vectors chosen conveniently and, consequently, in the exemplary equations described above, the equations (1), (25), (29), (3), (4), (11), (24) and (28) need to be respectively modified as follows:

$$y(k)=y_p(k)-y_{pc} \tag{33}$$

$$y'(k+r+1)=y'_p(k+r+1)-y_{pc} \tag{34}$$

$$y'(k+r+1+\lambda)=y'_p(k+r+1+\lambda)-y_{pc} \tag{35}$$

$$u(k-i-r)=u_p(k-i-r)-u_{pc} \tag{36}$$

$$w(k-i-r_2)=w_p(k-i-r_2)-w_{pc} \tag{37}$$

$$d_1(k+r+1)=d_p(k+r+1)-y_{pc} \tag{38}$$

$$d_1(k+r+1+\lambda)=d_p(k+r+1+\lambda)-y_{pc} \tag{39}$$

$$u_p(k)=u(k)+u_{pc} \tag{40}$$

Likewise, when it is considered convenient to give specific values to some of the adaptive-predictive model parameters (for instance, because of a certain knowledge of the process), these values can be given to the respective parameters, and the corresponding $\beta$ coefficients will be set to zero. Also it is possible to stop the updating operations of the adaptive-predictive model parameters as long as it is considered convenient.

When the system performs in its identification mode, it only needs to carry out the operations (a) to (e), and this identification action can be performed in real time or off-line, and even in between the sampling intervals.

It will be observed that in the operation (g), equation (27), the matrix $B_1(k)$ must be inverted to compute $u(k)$. The risk of singularity of the matrix $B_1(k)$, and in general the risk of inversion of a singular matrix in the computation of $u(k)$, can almost always be avoided by adding time delays to the components of the input and output process vectors, and controlling the resultant process. An illustrative experimental example of this procedure is presented below under Experimental Example 1.

In the foregoing description, the adaptive-predictive model is updated in accordance with equations (9)—(15). These equations are a particular case of a more general adaptive law, which law falls within the gradient parameter identification technique, and which permits the matrices to be updated in a manner which causes the estimated output vector to approach the actual output vector. Before setting forth this more general adaptive law (remembering that any appropriate law falling within the gradient parameter, or least squares, identification technique can be used), it is helpful to reexpress the adaptive-predictive model of equation (2) in a simpler form.

As set forth in equation (2), the adaptive-predictive model includes matrices $A_i(k-1)$ $(i=1,h)$, $B_i(k-1)$ $(i=1,f)$, and $C_i(k-1)$ $(i=1,g)$ and system vectors $y(k-i-r_1)$ $(i=1,h)$, $u(k-i-r)$ $(i=1,f)$, and $w(k-i-r_2)$ $(i=1,g)$. Alternatively, equation (2) and therefore the adaptive-predictive model may be expressed as follows:

$$d(k)=\theta(k-1)\ x(k) \tag{41}$$

wherein $\theta(k-1)$ is a matrix composed of the matrices of equation (2) and $x(k)$ is a vector composed of the vectors of the right hand side of equation (2). Each row j of the matrix $\theta(k)$ [$\theta(k-1)$ being the value of $\theta$ at the sampling instant $k-1$] corresponds to a vector $\theta_j(k)$ $(j=1,n)$, the components of which are the parameters $a_{ijq}(k)$ $(i=1,h;\ q=1,n)$, $b_{ijq}(k)$ $(i=1,f;\ q=1,n)$, and $c_{ijq}(k)$ $(i=1,g;\ q=1,m)$, that correspond to the jth row of the matrices $A_i(k)$, $B_i(k)$ and $C_i(k)$, respectively, each such vector being defined as follows:

$$\begin{aligned}
\theta_j(k)=[&a_{1j1}(k),\dots,a_{1jn}(k),\ a_{2j1}(k),\dots,a_{2jn}(k),\dots,a_{hjn}(k),\\
&b_{1j1}(k),\dots,b_{1jn}(k),\ b_{2j1}(k),\dots,b_{2jn}(k),\dots,a_{fjn}(k),\\
&c_{1j1}(k),\dots,c_{1jm}(k),\ c_{2j1}(k),\dots,c_{2jm}(k),\dots,c_{gpm}(k)]'
\end{aligned} \tag{42}$$

The vector $x(k)$, the components of which, $y_q(k-i-r_1)$ $(q=1,n;\ i=1,h)$, $u_q(k-i-r)$ $(q=1,n;\ i=1,f)$ and $w_q(k-i-r_2)$ $(q=1,m;\ i=1,g)$ are the corresponding components of the vectors $y(k-i-r_1)$, $u(k-i-r)$ and $w(k-i-r_2)$, respectively, is defined by:

$$\begin{aligned}
x(k)=[&y_1(k-1-r_1),\dots,y_n(k-1-r_1),\ y_1(k-2-r_1),\dots,y_n(k-2-r_1),\dots,y_n(k-h-r_1),\\
&u_1(k-1-r),\dots,u_n(k-1-r),\ u_1(k-2-r),\dots,u_n(k-2-r),\dots,u_n(k-f-r),\\
&w_1(k-1-r_2),\dots,w_m(k-1-r_2),\ w_1(k-2-r_2),\dots,w_m(k-2-r_2),\dots,w_m(k-g-r_2)]
\end{aligned} \tag{43}$$

Using the above notations, the more general adaptive law may be expressed as follows:

$$\theta_j(k)=D_j(k)\ \psi_j(k)^2\alpha'_j(k)\ e_j(k)x(k)+\theta_j(k-1)\ (j=1,n) \tag{44}$$

wherein $D_j(k)$ are diagonal matrices, the diagonal terms of which are the coefficients $\beta_{aijq}(k)$, $\beta_{bijq}(k)$ and $\beta_{cijq}(k)$ previously considered in equations (9)—(15), $\psi_j(k)$ are real gains, which can be conveniently chosen at each instant k, and $\alpha'_j(k)$ can be defined by:

$$\alpha'_j(k)=1/[1+\psi_j(k)^2x(k)'\ D_j(k)x(k)]\ (j=1,n) \tag{45}$$

A particular choice of the gains $\psi_j(k)$ can be the following:

$$\psi_j(k)= \sum_{i=1}^{\delta} a_i e_j(k)^{\beta i} \tag{46}$$

where $a_i$ and $\beta_i$ (i=1, $\delta$) are real numbers and $\delta$ is an integer that can be conveniently chosen.

If $\psi_j(k)$ (j=1,n) are chosen equal to 1, equations (44), (45) are equivalent to equations (9)—(15).

The adaptive law can be expressed even more generally if the vector $\theta_j(k)$ (j=1,n) is considered to include an integral term $\theta_{ji}(k)$ (j=1,n) and a proportional term $\theta_{jp}(k)$ (j=1,n). In such a case, the adaptive law may be expressed as follows:

$$\theta_j(k)=\theta_{ji}(k)+\theta_{jp}(k) \quad (j=1,n) \tag{47}$$

wherein:

$$\theta_{ji}(k)=D_j(k)\ \psi_j(k)^2 a_{ji}(k)\ e_{ji}(k)\ x(k)+\theta_{ji}(k-1) \quad (j=1,n) \tag{48}$$

$$\theta_{jp}(k)=\Phi_j(k)\ \psi_j(k)^2\ a_{ji}(k)\ e_{ji}(k)\ x(k) \quad (j=1,n) \tag{49}$$

wherein $D_j(k)$, $\psi_j(k)$ and $x(k)$ are as defined above, $\Phi_j(k)$ are positive definite or semidefinite real matrices that can be conveniently chosen, and $e_{ji}(k)$ and $a_{ji}(k)$ (j=1,n) can be respectively defined by:

$$e_{ji}(k)=y_j(k)-\theta_{ji}(k-1)'\ x(k) \tag{50}$$

$$a_{ji}(k)=1/[1+\psi_j(k)^2\ x(k)'\ (\Phi_j(k)+D_j(k))x(k)] \quad (j=1,n) \tag{51}$$

where $y_j(k)$ is the jth component of $y(k)$.

In the above description of the adaptive-predictive control system, the general adaptive law of the adaptive-predictive model parameters set forth in equations (8), (41)—(46) was based upon an estimated error vector $e(k)$, which vector was determined by comparing the estimated incremental process output vector $d(k)$ and the actual incremental process output vector $y(k)$. See equation (8). Alternatively, the estimated error vector $e(k)$ may be determined by comparing an estimation of any other output, control or measurable disturbance vector (which vectors are contained in the right-hand side of equation (2)) with the actual value of that vector. In such a case, the adaptive-predictive model must be placed in a form that the vector $d(k)$ will not be the estimation of the vector $y(k)$, but the estimation of the corresponding output, control or measurable disturbance vector considered. The error of this estimation will then be used to update the adaptive-predictive model.

By way of example, one particularly interesting manner of updating the parameters of the adaptive-predictive model is described in the following.

The control law (27) can also be written in the form:

$$u(k)=F_1(k)\ d_1(k+r+1)+ \sum_{i=2}^{h+1} F_i(k)\ y(k+r+2-r_1-i) + \sum_{i=1}^{f-1} H_i(k)\ u(k-i)+ \sum_{i=1}^{g} T_i(k)\ w(k+r+1-r_2-i) \tag{52}$$

where:

$$F_1(k)=B_1(k)^{-1} \tag{53}$$

$$F_{i+1}(k)=-B_1(k)^{-1}A_i(k) \quad (i=1,h) \tag{54}$$

$$H_{i-1}(k)=-B_1(k)^{-1}B_i(k) \quad (i=2,f) \tag{55}$$

$$T_i(k)=-B_1(k)^{-1}C_i(k) \quad (i=1,g) \tag{56}$$

The updating of the adaptive-predictive model matrices $F_i(k)$ (i=1,h+1), $H_i(k)$ (i=1,f−1), and $T_i(k)$ (i=1,g) can be made through the updating of matrices $A_i(k)$ (i=1,h), $B_i(k)$ (i=1,f) and $C_i(k)$ (i=1,g), as has been defined by equations (42)—(46). Alternatively, the adaptive-predictive model matrices $F_i(k)$, $H_i(k)$ and $T_i(k)$ can be updated through equations (44)—(46), but in which the vectors $e(k)$, $\theta_j(k)$ (j=1,n) and $x(k)$ are redefined according to the following:

1. The vector $d(k)$ will now be an estimation of the vector $u(k-r-1)$, and it will be computed by the adaptive-predictive model as follows:

$$d(k)=F_1(k-1)\ y(k)+ \sum_{i=2}^{h+1} F_i(k-1)\ y(k+1-i-r_1) + \sum_{i=1}^{f-1} H_i(k-1)\ u(k-1-i-r)+ \sum_{i=1}^{g} T_i(k-1)\ w(k-i-r_2) \tag{57}$$

Therefore, the identification error, $e(k)$ will be in this case defined by:

$$e(k)=u(k-r-1)-d(k) \tag{58}$$

2. The vectors $\theta_j(k)$ $(j=1,n)$ and $x(k)$ will now be defined by:

$$\begin{aligned}
\theta_j(k)=[&f_{1j1}(k),\ldots, f_{1jn}(k),\ f_{2j1}(k),\ldots, f_{2jn}(k),\ldots, f_{h+1jn}(k),\\
&h_{1j1}(k),\ldots, h_{1jn}(k),\ h_{2j1}(k),\ldots, h_{2jn}(k),\ldots, h_{f-1jn}(k),\\
&t_{1j1}(k),\ldots, t_{1jm}(k),\ t_{2j1}(k),\ldots, t_{2jm}(k),\ldots, t_{gjm}(k)]'
\end{aligned} \tag{59}$$

$$\begin{aligned}
x(k)=[&y_1(k),\ldots, y_n(k),\ y_1(k-1-r_1),\ldots, y_n(k-1-r_1),\ y_1(k-2-r_1),\ldots, y_n(k-h-r_1)\\
&u_1(k-2-r),\ldots, u_n(k-2-r),\ u_1,\ (k-3-r),\ldots, u_n(k-f-r),\\
&w_1(k-1-r_2),\ldots, w_m(k-1-r_2),\ w_1,\ (k-2-r_2),\ldots, w_m(k-g-r_2)]'
\end{aligned} \tag{60}$$

where the parameters $f_{ijq}(k)$, $(i=1, h+1;\ q=1,n)$, $h_{ijq}(k)$ $(i=1, f-1;\ q=1,n)$, and $t_{ijq}(k)$ $(i=1,g;\ q=1,m)$, correspond to the jth row of the matrices $F_i(k)$, $H_i(k)$, and $T_i(k)$; and $y_q(k)$ $(q=1,n)$, $y_q(k+1-i-r_1)$ $(i=2, h+1;\ q=1,n)$, $u_q(k-1-i-r)$ $(i=1, f-1;\ q=1,n)$, and $w_q(k-i-r_2)$ $(i=1,g;\ q=1,n)$ are the corresponding components of the vectors $y(k)$, $y(k+1-i-r_1)$ $(i=2, h+1)$, $u(k-1-i-r)$ $(i=1, f-1)$, and $w(k-i-r_2)$ $(i=1,g)$, respectively.

The diagonal terms of the diagonal matrices $D_j(k)$ $(j=1,n)$ that appear in equations (44) and (45), correspond in this case to time-variant coefficients $\beta_{fijq}(k)$, $\beta_{hijq}(k)$ and $\beta_{tijq}(k)$. A particular choice of these coefficients is to make them proportional to the absolute values of the corresponding parameters $f_{ijq}(k)$, $h_{ijq}(k)$ and $t_{ijq}(k)$, as it was previously considered for coefficients $\beta_{aijq}(k)$, $\beta_{bijq}(k)$ and $\beta_{cijq}(k)$ in equation (13), (14) and (15).

Also, the adaptive-predictive model matrices $F_i(k)$ $(i=1, h+1)$, $H_i(k)$, $(i=1, f-1)$, and $T_i(k)$ $(i=1,g)$ can be updated in accordance with equations (47)—(51), but in which the vectors $\theta_j(k)$ and $x(k)$ are those defined in equations (59) and (60) and $e_{ji}(k)$ $(j=1,n)$ are obtained by:

$$e_{ji}(k)=u_j(k-r-1)-\theta_{ji}(k-1)'x(k)\ (j=1,n) \tag{61}$$

where $u_j(k-r-1)$ is the jth component of the vector $u(k-r-1)$.

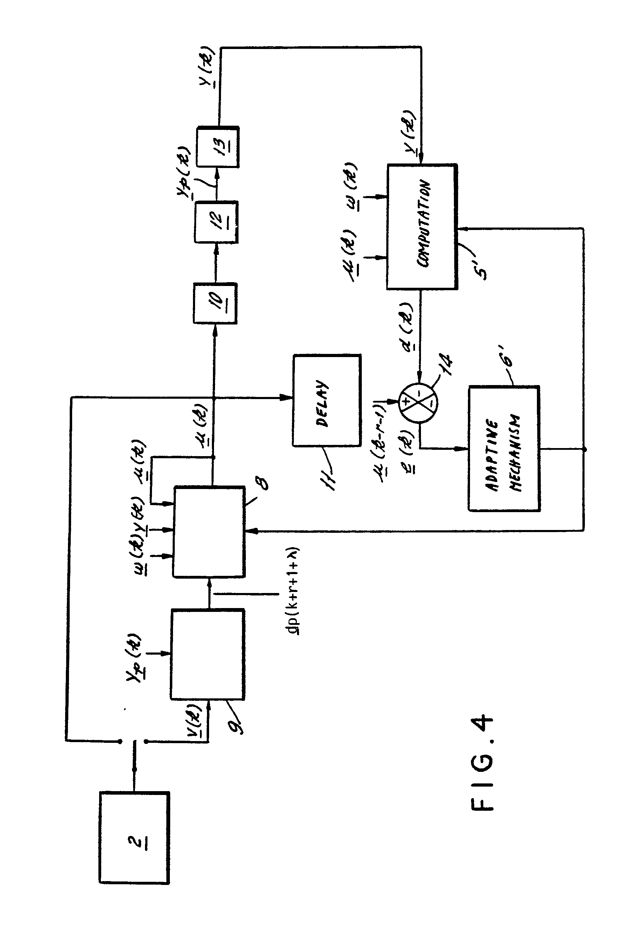

A block diagram illustrating the manner in which the adaptive-predictive control system would be modified in order to permit the updating of the parameters of the adaptive-predictive model in accordance with equations (44)—(46) and (57)—(60) is shown in Figure 4. Such a system updates the parameters of the adaptive-predictive model by comparing an estimated control vector (indicative of the estimated value of the incremental control vector at a prior sampling instant $(k-r-1)$) with the actual value of the control vector at the same prior sampling instant $(k-r-1)$.

Elements 2, 8, 9, 10, 12 and 13 of Figure 4 are identical in operation to the corresponding elements of Figure 1 and will not be described herein. The major difference between the embodiments of Figures 1 and 4 concerns the computation block 5' and the adaptive mechanism 6'. The computational block 5' of Figure 4 generates an estimated incremental control vector $d(k)$ in accordance with equation (57). This vector is applied to subtractor 14 which subtracts the vector $d(k)$ from the measured value of the incremental control vector $u(k)$ at sampling instant $(k-r-1)$ to generate the error vector $e(k)$ in accordance with equation (58). Incremental control vector $u(k)$ is delayed in delay block 11 for $r+1$ sampling instants before being applied to subtractor 14.

The error vector $e(k)$ generated by subtractor 14 is applied to adaptive mechanism 6' which updates the parameters of the adaptive-predictive model in computation block 5' and control block 8 in accordance with equations (44)—(46).

In some cases, an equivalent way of applying the control system presented here, is to decompose it to a set of single-output multi-input systems, each one of which will impose a condition to be verified by the components of the control vector at every sampling instant, and from the set of the n corresponding linear equations the control vector can be computed at every sampling instant.

Finally, the static gains of the process can be modified by multiplying the components of its output, input and disturbance vectors or incremental vectors by scalars gain; and also the dynamics of the process can be modified in an analogous way; in this case the control system will control the process through the control of the modified process.

Experimental Example 1

Multivariable control of a binary distillation column.

The adaptive-predictive control system, previously described, has been implemented for the multivariable control of top and bottom compositions (in weight % of methanol) of a binary distillation column, at the Chemical Engineering Department, University of Alberta, Edmonton, Alberta, Canada).

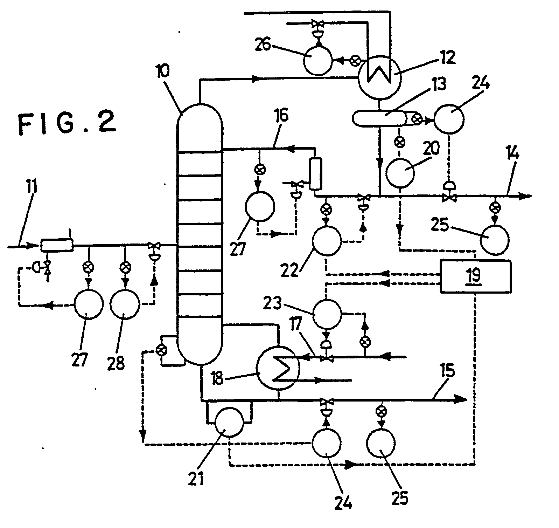

As shown in Figure 2, the feed flow 11 enters into the distillation column 10 at the fourth ashtray, the top product condensates in 12 by cooling water, and falls to the container 13. The objective of the experiment is to control the composition of the bottom product 15, that goes away from the bottom of the column.

We have used as control variables, the reflux flow rate 16 and the steam flow rate 17, that heats the reboiler 18 in the bottom of the column. To accomplish the experiment we have used a digital computer 19, that takes the measurements of top and bottom compositions made by a composition recorder 20 and a gas chromatograph system 21, respectively, and that control the set point of the flow recorder controllers 22 and 23. In addition, the column had the following equipment: two liquid level indicator controllers 24, two flow recorders 25, a pressure indicator controller 26, two temperature recorder controllers 27 and a flow recorder controller 28.

The control variables were the reflux and the steam flow rates, and the sampling period was of 256 sec. Due to this large sampling period, there is no time delay between top composition and reflux and steam flow rates. There exists a measurement time delay of one sampling period between bottom composition and steam flow rate, because of the analysis time needed to measure the bottom composition, and the time delay between bottom composition and reflux rate was observed to be two sampling intervals. No significant disturbance was acting upon the process.

To avoid the problem of the singularity of $B_1(k)$, previously discussed, a sampling time delay was added to the top composition measurement; consequently, the corresponding component of the process output vector related to the top composition at the sampling instant k, is the measurement of the top composition at instant k−1; likewise, this component at instant k+1 is already known at instant k.

In accordance with the previously described circumstances, at every sampling instant k, the sequence of operations performed by the adaptive-predictive control system during its control action were:

1. Measurement of top and bottom compositions to obtain the process output vector $y(k)$, the components of which are the top composition measured at k−1, $y_{p1}(k)$, and the bottom composition measured at k, $y_{p2}(k)$.

2. The number of sampling time delays considered for the process r is, in this case, equal to 1, and the integer γ was chosen equal to 2, consequently the incremental output vector is computed by:

$$y(k) = y_p(k) - y_p(k-2) \qquad (62)$$

3. In the adaptive-predictive model, the integers h, f and $r_1$ were chosen equal to 3, 4 and 0, respectively, and no disturbance vector was considered; consequently, the estimated incremental output vector $d(k)$ was computed by:

$$
\begin{bmatrix} d_1(k) \\ \\ d_2(k) \end{bmatrix}
= \sum_{i=1}^{3} A_i(k-1) \begin{bmatrix} y_1(k-i) \\ \\ y_2(k-i) \end{bmatrix}
+ \sum_{i=1}^{4} B_i(k-1) \begin{bmatrix} u_1(k-i-1) \\ \\ u_2(k-i-1) \end{bmatrix} \qquad (63)
$$

where $d_1$ and $y_1$ are components related to the top composition; and $d_2$ and $y_2$ are the components related to the bottom composition. $u_1$ and $u_2$ are the incremental reflux and steam flow rates respectively. The incremental control vector $u(k-i-1)$ is obtained by:

$$u(k-i-1) = u_p(k-i-1) - u_p(k-i-3) \qquad (64)$$

wherein $u_p(k-i-1)$ is the control vector applied at instant k−i−1. The matrices $A_i(k-1)$ (i=1, 3) and $B_i(k-1)$ and (i=1, 4) were chosen being:

$$
A_1(k-1) = \begin{bmatrix} a_{111}(k-1) & 0 \\ 0 & 0 \end{bmatrix} \quad ; \quad
A_2(k-1) = \begin{bmatrix} a_{211}(k-1) & 0 \\ 0 & a_{222}(k-1) \end{bmatrix}
$$

$$
A_3(k-1) = \begin{bmatrix} 0 & 0 \\ 0 & a_{322}(k-1) \end{bmatrix}
$$

$$
B_1(k-1) = \begin{bmatrix} b_{111}(k-1) & b_{112}(k-1) \\ 0 & b_{122}(k-1) \end{bmatrix} \quad ; \quad
B_2(k-1) = \begin{bmatrix} b_{211}(k-1) & b_{212}(k-1) \\ b_{221}(k-1) & b_{222}(k-1) \end{bmatrix}
$$

$$
B_3(k-1) = \begin{bmatrix} 0 & 0 \\ b_{321}(k-1) & b_{322}(k-1) \end{bmatrix} \quad ; \quad
B_4(k-1) = \begin{bmatrix} 0 & 0 \\ b_{421}(k-1) & 0 \end{bmatrix}
$$

4. Computation of the estimation error vector as indicated in equation (8).

5. Computation of the updated values at instant k of the parameters of the matrices $A_i(k)$ (i=1, 3) and $B_i(k)$ (i=1, 4), according to the equations (9), (10) and (12), taking into account that no disturbances were

14

considered and that the value of the coefficients $\beta$ corresponding to the non-zero parameters in the top and bottom rows were set to 1 and 0.1, respectively, and the $\beta$'s corresponding to remaining zero parameters in both the rows were set equal 0.

6. The components of the desired process output vector $d_p(k+2)$ at instant $k+2$, $d_{pi}(k+2)$, related to top and bottom compositions, respectively, are computed by the following scalar equations, that are a particular case of the equation 16:

$$d_{p1}(k+2)= \sum_{i=1}^{2} f_{1i}\, y_1(k+2-i) + \sum_{i=1}^{2} h_{1i}\, v_1(k+1-i) \qquad (65)$$

$$d_{p2}(k+2)= \sum_{i=1}^{2} f_{2i}\, y_2(k+1-i) + \sum_{i+1}^{3} h_{2i}\, v_2(k+1-i) \qquad (66)$$

where $v_1(k+1-i)$ and $v_2(k+1-i)$ are the components related to the top and bottom compositions, respectively, of the driver block input vector $v(k+1-i)$ at instant $(k+1-i)$. The parameters of equations (65) and (66) were chosen equal to those of a second order model, without and with a sampling time delay respectively, a natural frequency of 0.0056 rad/sec, a damping ratio and static gain equal to 1. Given that the value of the previously mentioned static gain is unity, the components $v_1(k+1-i)$ and $v_2(k+1-i)$ have the physical meaning of being the setpoint values for top and bottom compositions, respectively, at instant $k+1-i$.

In equation (65) the value $y_1(k+1)$ was previously computed by:

$$y_1(k+1)=y_{p1}(k+1)-y_{p1}(k-1) \qquad (67)$$

Note that $y_{p1}(k+1)$ is the value of the top composition measured at instant k.
From $d_p(k+2)$, the desired incremental process output vector $d_1(k+2)$ is computed by:

$$d_1(k+2)=d_p(k+2)-y_p(k) \qquad (68)$$

The components of $d_1(k+2)$, $d_{11}(k+2)$ and $d_{12}(k+2)$, related to the top and bottom compositions, were limited to the absolute values of 0.3 and 0.6%, respectively.

7. Computation of the control vector by:

$$u(k)=B_1(k)^{-1}d_1(k+2)-B_1(k)^{-1} \sum_{i=2}^{4} B_i(k)\, u(k+1-i) -B_1(k)^{-1} \sum_{i=1}^{3} A_i(k)\, y(k+2-1) \qquad (69)$$

$$u_p(k)=u(k)+u_p(k-2) \qquad (70)$$

8. The absolute and the incremental value of $u_p(k)$ was limit checked before being applied to the process.

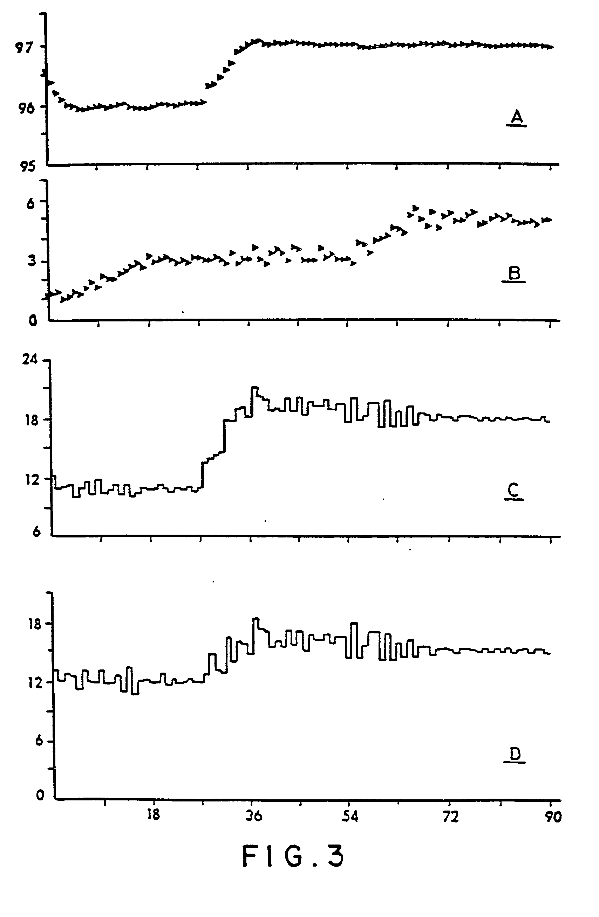

Figure 3 shows, from the beginning of the control action, the results of a 6 hrs. 24 min. experiment in which the distillation column was controlled by the adaptive-predictive control system.

In Figure 3, the diagrams A, B, C and D represent, in the Y-axis, the top composition (%), the bottom composition (%), the reflux flow rate (g/s) and the steam flow rate (g/s), respectively, and in the X-axis the time in sampling instants.

The initial values of the parameters of the adaptive-predictive model were rationally chosen, and the control system performed in its identification mode for two sampling instants before starting the control action. When the control action starts, the control system drives the process top and bottom compositions from 96.5 and 1% to 96 and 3%, respectively. Later on, at the instant 29, while the bottom composition is held at 3%, the top composition is driven to 97%, and at the instant 55, the bottom composition is driven from 3 to 5% and the top composition is held at 97%.

Note that the multivariable control problem of a binary distillation column, that the adaptive-predictive control system has solved commendably, has been for a long time an often cited example of difficulties in interacting multivariable chemical processes.

Experimental Example 2

Control of a single-input single-output simulated process with an unstable inverse.

The adaptive-predictive control system, previously described, has been implemented for the control of a simulated single-input single-output process, the inverse of which is unstable. When the sampling period is chosen equal to 25 sec, the dynamic behavior of said simulated process is defined by the equation:

$$y_t(k)=0.97512\, y_t(k-1)-0.24708\, y_t(k-2)+0.01426\, y_t(k-3)$$
$$+0.09465\, u_t(k-1)+0.15042\, u_t(k-2)+0.01262\, u_t(k-3) \qquad (71)$$

15

Where $y_t(k)$ and $u_t(k-1)$ are the true output and input of the process at instants k and k−1, respectively. This process takes approximately 250 sec to reach a steady-state output in response to a step input. The simulation considers the measured process output $y_p(k)$ computed according to:

$$y_p(k)=y_t(k)+n_y(k) \tag{72}$$

where $n_y(k)$ is a gaussian noise of zero mean and standard deviation 5.

The true process input $u_t(k)$ is considered equal to the control $u_p(k)$, but when a non-measurable disturbance is considered, then:

$$u_t(k)=u_p(k)+n_u \tag{73}$$

where $n_u$ is the considered non-measurable disturbance.

In this implementation of the adaptive-predictive control system, at every sampling instant k, the desired output trajectory was selected to minimize an index such as the third index considered in operation (f) supra. Also, the incremental control u(k) was explicitly computed from the desired incremental output $d_1(k+r+1+\lambda)$, with $\lambda=1$, instead of the desired incremental output $d_1(k+r+1)$.

According to the previously described circumstances, at every sampling instant k, the sequence of operations performed by the adaptive-predictive control system during its control action were:

1. Measurement of the process output $y_p(k)$, according to equation (72).

2. Given that the number of sampling time delays considered for the process r is, in this case, equal to 0, and the integer $\lambda$ was chosen equal to 1, the integer $\gamma$ was chosen equal to 2. Consequently, the incremental process output was computed by:

$$y(k)=y_p(k)-y_p(k-2) \tag{74}$$

3. In the adaptive-predictive model, the integers h, f and $r_1$ were chosen equal to 2, 3 and 1, respectively, and no measurable disturbance was considered. Consequently, the estimated incremental process output d(k) was computed by:

$$d(k)= \sum_{i=1}^{2} a_i(k-1)\ y(k-1-i)+ \sum_{i=1}^{3} b_i(k-1)\ u(k-i) \tag{75}$$

where the incremental control u(k−i) is obtained by:

$$u(k-i)=u_p(k-i)-u_p(k-i-2) \tag{76}$$

4. Computation of the estimation error vector as indicated in equation 8.

5. Computation of the updated values at instant k of the parameters $a_i(k)(i=1, 2)$ and $b_i(k)(i=1, 3)$, according to the single-input single-output case of equations (9), (10) and (12), taking into account that no disturbances were considered and that the value of the coefficients $\beta_{ai}(k)$ and $\beta_{bi}(k)$ were set equal to 0.0125 and 0.0025, respectively.

6. The desired process output $d_p(k+r+1+\lambda)$ became in this case $d_p(k+2)$, given that r=0 and $\lambda=1$, and was computed by:

$$d_p(k+2)=0.19514\ y(k)-0.05568\ y(k-1)+0.26547\ v(k)+0.33215\ v(k-1)+0.20773\ v(k-2) \tag{77}$$

where v(k) is the setpoint or driver block input at instant k, and the parameters of equation (77) were chosen equal to those of a second order model with a sampling time delay, a time constant of 25 sec, a damping ratio and static gain equal to 1.

From $d_p(k+2)$ the desired incremental process output $d_1(k+2)$ is computed by:

$$d_1(k+2)=d_p(k+2)-y_p(k) \tag{78}$$

7. Computation of the control vector by:

$$u(k)=[d_1(k+2)- \sum_{i=1}^{2} a_i(k)\ y(k+1-i)-b_1(k)(u_p(k-2)-u_p(k-1))-b_3(k)\ u(k-1)]/[b_1(k)+b_2(k)] \tag{79}$$

$$u_p(k)=u(k)+u_p(k-2) \tag{80}$$

8. Before being applied to the process, the value of the control $u_p(k)$ was limited between 1,000 and 0,

16

while the absolute value of the incremental control u(k) was limited to 100, although this incremental limit was progressively decreased until 2 when the process output y(k) approached the setpoint v(k).

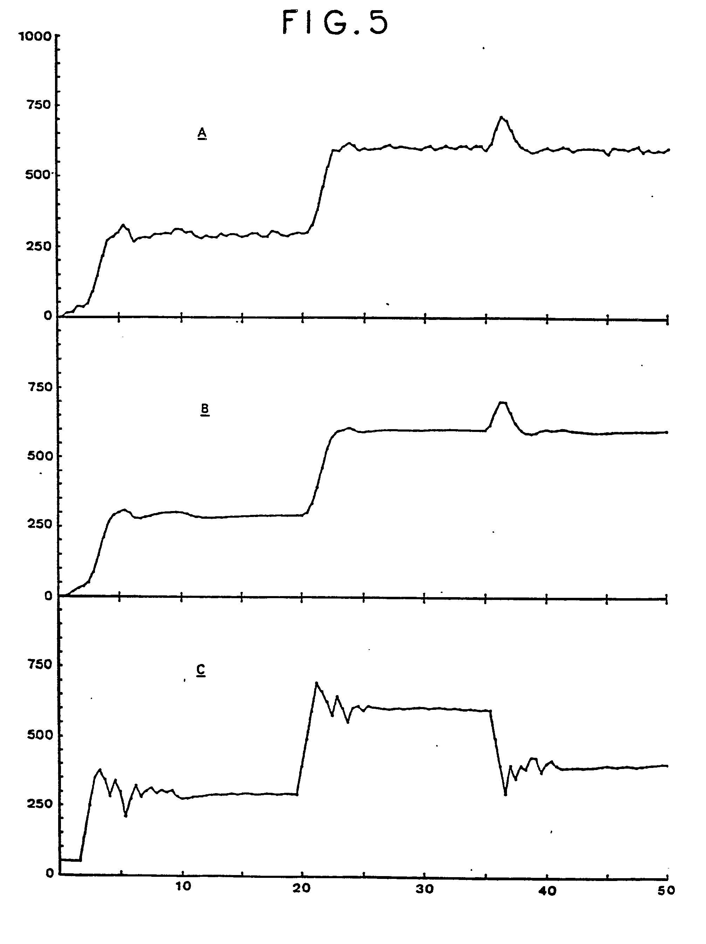

Figure 5 shows the results of a 50 min experiment in which the simulated process was controlled by the adaptive-predictive control system. The sampling period was 25 sec.

In Figure 5, the diagrams A, B and C represent, in the y-axis, the process output measurement $y_p(k)$, the true process output $y_t(k)$ and the control $u_p(k)$, respectively, and in the x-axis the time in minutes. The initial values of the parameters of the adaptive-predictive model were: $b_1(0)=.1$, $b_2(0)=.2$, $b_3(0)=.1$, $a_1(0)=.6$, $a_2(0)=-.3$. The control system performed in its identification mode for four sampling instants before starting the control action. When the control action starts, the setpoint is 300. This setpoint is changed to 600 at minute 20, and at minute 35 a non-measurable disturbance equal to 200 acts on the process.

In summary, the adaptive-predictive control system described uses a digital computer to accomplish the adaptive control of single-input single-output or multivariable time-variant processes with known or unknown parameters and with or without time delays, in such a way that the dynamic output vector of the process is predicted and the control vector, to be applied to the process, is computed with the objective that the predicted dynamic output vector becomes equal to the desired dynamic process output vector and with the further objective that the desired dynamic output vector and the said control vector optimize a chosen performance criterion in which a future reference trajectory is explicitly considered, said reference trajectory being periodically redefined as a function of the previously measured process output and evolving according to desired dynamics to the set point.

**Claims**

1. A method for generating a control vector during each of a plurality of sampling instants k, said control vector to be applied to an apparatus which carries out a process having at least one input variable and at least one output variable, at least one of said input variables defining a process input vector, said apparatus varying said process input vector in accordance with the value of said control vector, said method comprising the steps of storing a model which is capable of predicting the dynamic value of a process output vector which vector is composed of at least one of said process output variables at predetermined future sampling instants, generating a desired process output vector at each of said sampling instants k, said desired dynamic process output vector being representative of a desired value of said process output vector at said predetermined future sampling instants k+r+1, r being the number of sampling time delays it takes the process to respond to a change in the process input vector, and generating at each of said sampling instants k that control vector which said model predicts will cause said dynamic process output vector to be equal to said desired dynamic process output vector at said future sampling instant k+r+1, characterized in that the model comprises data for predicting the trajectory of the dynamic process output vector between said future sampling instant k+r+1 and a further future sample instant k+r+1+λ, λ being a positive integer, as a function of a future sequence of said control vectors between sampling instants k and k+λ, in that at each of said sampling instants k, a desired dynamic process output trajectory is selected between sampling instants k+r+1 and k+r+1+λ, and in that the control vector which is generated at each of said sampling instants k is the first vector of a future sequence of control vectors between sampling instants k and k+λ, that will cause the value of said predicted trajectory of dynamic process output vectors at sampling instant k+r+1+λ to be equal to the value of said desired dynamic process output trajectory at said sampling instant k+r+1+λ.

2. The method of claim 1, wherein said desired dynamic process output trajectory being equal to that specific process output trajectory between sampling instants k+r+1 and k+r+1+λ, which said model predicts would be caused by said future sequence of control vectors between sampling instants k and k+λ, and such that said specific process output trajectory and said future control sequence optimize a chosen performance criterion defined by an index which includes a first set of weighting matrices corresponding to the set of dynamic process output vectors included in the process output trajectory predicted by said model and a second set of weighting matrices corresponding to the set of the control vectors included in the sequence of control vectors that said model predicts will cause said process output trajectory, said weighting matrices being selected such that said index may be minimized without requiring the solution of a Ricatti equation.

3. The method of claim 2, wherein optimization of said chosen performance criterion is obtained by minimizing the value of said index, said index varying as a function of at least one of a reference trajectory of process output vectors, a setpoint of said process, previously measured process output and control vectors, constraints on the permissible value of said control vectors and any other parameter or variables that influence the control performance of said process.

4. The method of claim 3, wherein said index varies as a function of the difference between the values of the process output vector trajectory predicted by said adaptive-predictive model and the values of said reference trajectory and also as a function of the incremental values of the control vector sequence that said model predicts will generate said values of said process output vector trajectory.

5. The method of claim 4, wherein the minimization of said index is obtained when said future specific control sequence is assumed constant from instant k to instant k+.

6. The method of claim 5, wherein the value of said desired dynamic process output trajectory at

17

# 0 037 579

sampling instant k+r+1+λ is equal to the value of said reference trajectory at said sampling instant k+r+1+λ.

7. The method of claims 3, 4, 5 or 6, wherein said reference trajectory is periodically redefined as a function of the previously measured process outputs and evolves according to desired dynamics to the setpoint.

8. The method of claims 1, 2, 3, 4, 5, 6 or 7, wherein said step of generating said control vector includes the step of generating an incremental control vector, representative of the incremental variation in the input vector of said process, said incremental control vector being the first vector of a future sequence of incremental control vectors between sampling instants k and k+λ, which said model predicts will cause an incremental variation in said dynamic process output vector such that said dynamic process output vector at said sampling instant k+r+1+λ will be equal to the value of said desired dynamic process output trajectory at said sampling instant k+r+1+λ.

9. The method of claims 1, 2, 3, 4, 5, 6 or 7, further comprising the step of periodically updating the parameters of said model in such a manner that the difference between the actual dynamic process output vector at sampling instant k+r+1 and the dynamic process output vector which said model predicts would result at said sampling instant k+r+1 is reduced towards 0, said step of periodically updating the parameters of said model including the steps of:

(A) periodically generating, in accordance with said adaptive-predictive model as updated at a prior sampling instant, an estimation vector d(k) representative of either an output vector, a control vector or a measurable disturbance vector of said process being controlled at a given sampling instant;

(B) periodically generating an estimated error vector representative of the difference between said estimation vector at said given sampling instant and the actual value of the vector estimated by said estimation vector at said given sampling instant; and

(C) periodically modifying the parameters of said model as a function of said estimated error vector.

10. The method of claim 8, further comprising the step of periodically updating the parameters of said model in such a manner that the difference between the actual dynamic process output vector at sampling instant k+r+1 and the dynamic process output vector which said model predicts would result at said sampling instant k+r+1 is reduced towards 0, said step of periodically updating the parameters of said model including the steps of:

(A) periodically generating, in accordance with said adaptive-predictive model as updated at a prior sampling instant, an estimation vector d(k) representative of either an ouptut vector, a control vector or a measurable disturbance vector of said process being controlled at a given sampling instant;

(B) periodically generating an estimated error vector representative of the difference between said estimation vector at said given sampling instant and the actual value of the vector estimated by said estimation vector at said given sampling instant; and

(C) periodically modifying the parameters of said model as a function of said estimated error vector.

11. The method of claim 10, further including the step of generating an incremental vector indicative of the difference between the actual value of said one of said control, output or measurable disturbance vectors at said given sampling instant and the actual value of said one of said control, output or measurable disturbance vectors at an earlier sampling instant; wherein said estimation vector is the value of said incremental vector estimated by said model as updated at said prior sampling instant; and wherein said step of generating an estimated error vector comprises the step of determining the difference between the value of said incremental vector and the value of said estimation vector.

12. A system for generating a control vector during each of a plurality of sampling instants k, said control vector to be applied to an apparatus which carries out a process having at least one input variable and at least one output variable, at least one of said input variables defining a process input vector, said apparatus varying said process input vector in accordance with the value of said control vector, said system comprising means for storing a model which is capable of predicting the dynamic value of a process output vector, which vector is composed of at least one of said process output variables at predetermined future sampling instants, and means for generating a desired process output vector at each of said sampling instants k, said desired dynamic process output vector being representative of a desired value of said process output vector at said predetermined future sampling instants k+r+1, r being the number of sampling time delays it takes the process to respond to a change in the process input vector, and for generating at each of said sampling instants k that control vector which said model predicts will cause the dynamic process output vector to be equal to said desired dynamic process output vector at said future sampling instant k+r+1, characterized in that the model comprises data for predicting the trajectory of the dynamic process output vector between said future sampling instant k+r+1 and a further future sampling instant k+r+1+λ, λ being a positive integer, as a function of a future sequence of said control vector between sampling instants k and k+λ, in that said system comprising means for selecting, at each of said sampling instants k, a desired dynamic process output trajectory between sampling instants k+r+1 and k+r+1+λ, and in that said generating means generate at each said sampling instants k a control vector which is the first vector of a future sequence of control vectors between sampling instants k and k+λ, that will cause the value of said predicted trajectory of dynamic process output vectors at sampling instant k+r+1+λ to be equal to the value of said desired dynamic process output trajectory at said sampling instant k+r+1+λ.

18

13. The system of claim 12, wherein said desired dynamic process output trajectory being equal to a specific process output trajectory between sampling instants $k+r+1$ and $k+r+1+\lambda$, that said model predicts would be caused by said future sequence of control vectors between sampling instants k and $k+\lambda$, and such that said specific process output trajectory and said future control sequence optimize a chosen performance criterion defined by an index which includes a first set of weighting matrices corresponding to the set of dynamic process output vectors included in the process output trajectory predicted by said model and a second set of weighting matrices corresponding to the set of the control vector included in the sequence of control vectors that said model predicts will cause said process output trajectory, said weighting matrices being selected such that said index may be minimized without requiring the solution of a Ricatti equation.

14. The system of claim 13, wherein optimization of said chosen performance criterion is obtained by minimizing the value of said index, said index varying as a function of at least one of a reference trajectory of process output vectors, a setpoint of said process, previously measured process output and control vector sequences, constraints on the permissible values of said control vector and any other parameter or variables that influence the control performance of said process.

15. The system of claim 14, wherein said index varies as a function of the difference between the values of the process output vector trajectory predicted by said adaptive-predictive model and the values of said reference trajectory and is also a function of the incremental values of the control vector sequence that said adaptive-predictive model predicts will generate said values of said process output vector trajectory.

16. The system of claim 15, wherein the minimization of said index is obtained when said future specific control sequence is assumed constant from instant k to instant $k+\lambda$.

17. The system of claim 16, wherein the value of said desired dynamic process output trajectory at sampling instant $k+r+1+\lambda$ is equal to the value of said reference trajectory at said sampling instant $k+r+1+\lambda$.

18. The system of claims 14, 15, 16 or 17, wherein said reference trajectory is periodically redefined as a function of the previously measured process outputs and evolves according to desired dynamics to the setpoint.

19. The system of claims 12, 13, 14, 15, 16, 17 or 18, wherein said means for generating said control vector includes means for generating an incremental control vector representative of the incremental variation in the input vector of said process, said incremental control vector being the first vector of a future sequence of incremental control vectors between sampling instants k and $k+\lambda$, which said model predicts will cause an incremental variation in said dynamic process output vector such that said dynamic process output vector at said sampling instant $k+r+1+\lambda$ will be equal to the value of said desired dynamic process output trajectory at said sampling instant $k+r+1+\lambda$.

20. The system of claims 12, 13, 14, 15, 16, 17 or 18, further comprising means for periodically updating the parameters of said model in such a manner that the difference between the actual dynamic process output vector at sampling instant $k+r+1$ and the dynamic process output vector which said model predicts would result at said sampling instant $k+r+1$ is reduced toward zero, said updating means updating the parameters of said model by:

(A) periodically generating, in accordance with said adaptive-predictive model as updated at a prior sampling instant, an estimation vector d(k) representative of either an output vector, a control vector, or a measurable disturbance vector of said process being controlled at a given sampling instant;

(B) periodically generating an estimated error vector representative of the difference between said estimation vector at said given sampling instant and the actual value of said vector estimated by said estimation vector at said given sampling instant; and

(C) periodically modifying the parameters of said model as a function of said estimated error vector.

21. The system of claim 19, further comprising means for periodically updating the parameters of said model in such a manner that the difference between the actual dynamic process output vector at sampling instant $k+r+1$ and the dynamic process output vector which said model predicts would result at said sampling instant $k+r+1$ is reduced toward zero, said updating means updating the parameters of said model by:

(A) periodically generating, in accordance with said adaptive-predictive model as updated at a prior sampling instant, an estimation vector d(k) representative of either an output vector, a control vector, or a measurable disturbance vector of said process being controlled at a given sampling instant;

(B) periodically generating an estimated error vector representative of the difference between said estimation vector at said given sampling instant and the actual value of said vector estimated by said estimation vector at said given sampling instant; and

(C) periodically modifying the parameters of said model as a function of said estimated error vector.

22. The system of claim 21, further including means for generating an incremental vector indicative of the difference between the actual value of said one of said control, output or measurable disturbance vectors at said given sampling instant and the actual value of said one of said control, output or measurable disturbance vectors at an earlier sampling instant; and wherein:

said estimation vector is the value estimated by said model, as updated at said prior sampling instant, of said incremental vector; and

said means for periodically updating the parameters of said model generates said estimated error

**0 037 579**

vector by determining the difference between the value of said incremental vector and the value of said estimation vector.

**Patentansprüche**

1. Verfahren zur Erzeugung eines Steuervektors während jedes einer Vielzahl von Abtastzeitpunkten k, bei dem der Steuervektor einer Vorrichtung zuzuführen ist, die einen Prozeß ausführt, der zumindestens eine Eingangsvariable und zumindestens eine Ausgangsvariable aufweist, bei dem zumindestens eine der Eingangsvariablen einen Prozeß-Eingangsvektor definiert und die Vorrichtung den Prozeß-Eingangsvektor entsprechend dem Wert des Steuervektors ändert, und bei dem das Verfahren die folgenden Schritte umfaßt: Speichern eines Modells, das den dynamischen Wert eines Prozeß-Ausgangsvektors vorhersagen kann, der aus zumindestens einer der Prozeß-Ausgangsvariablen an vorgegebenen zukünftigen Abtastzeitpunkten besteht, Erzeugen eines gewünschten Prozeß-Ausgangsvektors zu jedem der Abtastzeitpunkte k, wobei der gewünschte dynamische Prozeß-Ausgangsvektor einen gewünschten Wert des Prozeß-Ausgangsvektors an den vorgegebenen zukünftigen Abtastzeitpunkten k+r+1 darstellt, worin r die Anzahl der Abtastzeitverzögerungen ist, die der Prozeß benötigt, um auf eine Änderung des Prozeß-Eingangsvektors anzusprechen, und Erzeugen, an jedem der Abtastzeitpunkte k, des Steuervektors, von dem das Modell voraussagt, daß er bewirkt, daß der dynamische Prozeß-Ausgangsvektor gleich dem gewünschten dynamischen Prozeß-Ausgangsvektor an dem zukünftigen Abtastzeitpunkt k+r+1 ist, dadurch gekennzeichnet, daß das Modell Daten zur Vorhersage des Verlaufs des dynamischen Prozeß-Ausgangsvektors zwischen dem zukünftigen Abtastzeitpunkt k+r+1 und einem weiteren zukünftigen Abtastzeitpunkt k+r+1+λ, worin λ eine positive ganze Zahl ist, als eine Funktion einer zukünftigen Folge der Steuervektoren zwischen den Abtastzeitpunkten k und k+λ umfaßt, daß zu jedem der Abtastzeitpunkte k ein gewünschter dynamischer Prozeß-Ausgangsverlauf zwischen den Abtastzeitpunkten k+r+1 und k+r+1+λ ausgewählt wird, und daß der Steuervektor, der an jedem der Abtastzeitpunkte k erzeugt wird, der erste Vektor einer zukünftigen Folge von Steuervektoren zwischen den Abtastzeitpunkten k und k+λ ist, die bewirkt, daß der Wert das vorausgesagten Verlaufs von dynamischen Prozeß-Ausgangsvektoren an dem Abtastzeitpunkt k+r+1+λ gleich dem Wert des gewünschten dynamischen Prozeß-Ausgangsverlaufs an dem Abtastzeitpunkt k+r+1+λ ist.

2. Verfahren nach Anspruch 1, dadurch gekennzeichnet, daß der gewünschte dynamische Prozeß-Ausgangsverlauf gleich dem speziellen Prozeß-Ausgangsverlauf zwischen den Abtastzeitpunkten k+r+1 und k+r+1+λ ist, von dem das Modell voraussagt, daß er durch die zukünftige Folge von Steuervektoren zwischen den Abtastzeitpunkten k und k+λ hervorgerufen würde, und derart, daß der spezielle Prozeß-Ausgangsverlauf und die zukünftige Steuerfolge ein gewähltes Verhaltenskriterium optimieren, das durch einen Index definiert ist, der einen ersten Satz von Bewertungsmatrizen, die dem Satz von dynamischen Prozeß-Ausgangsvektoren entsprechen, die in dem Prozeß-Ausgangsverlauf eingeschlossen sind, der von dem Modell vorhergesagt wird, und einen zweiten Satz von Bewertungsmatrizen einschließt, die dem Satz von Steuervektoren entsprechen, die in der Folge der Steuervektoren eingeschlossen sind, von der das Modell voraussagt, daß sie den Prozeß-Ausgangsverlauf hervorruft, wobei die Bewertungsmatrizen derart ausgewählt sind, daß der Index minimiert werden kann, ohne daß die Lösung einer Ricatti-Gleichung erforderlich ist.

3. Verfahren nach Anspruch 2, dadurch gekennzeichnet, daß die Optimierung des gewählten Verhaltenskriteriums durch Minimieren des Wertes des Index erzielt wird, und daß sich der Index als eine Funktion eines Bezugsverlaufs des Prozeß-Ausgangsvektors, als Funktion eines Sollwertes des Prozesses, als Funktion vorher gemessener Prozeß-Ausgangs- und Steuervektoren, also Funktion von Zwangsbedingungen hinsichtlich des zulässigen Wertes der Steuervektoren und als Funktion von irgendwelchen anderen Parametern oder Variablen, die das Steuerverhalten des Prozesses beeinflussen, oder als Funktion mehrerer dieser Bedingungen ändert.

4. Verfahren nach Anspruch 3, dadurch gekennzeichnet, daß sich der Index als Funktion der Differenz zwischen den Werten des Verlaufes des Prozeß-Ausgangsvektors, der von dem selbstanpassenden prädiktiven Modell vorausgesagt wird, und den Werten des Bezugsverlaufes sowie außerdem als Funktion der inkrementalen Werte der Steuervektorfolge ändert, von der das Modell voraussagt, daß sie die Werte des Prozeß-Ausgangsvektor-Verlaufs erzeugt.

5. Verfahren nach Anspruch 4, dadurch gekennzeichnet, daß die Minimierung des Index erzielt wird, wenn angenommen wird, daß die zukünftige spezielle Steuerfolge vom Zeitpunkt k zum Zeitpunkt k+λ konstant ist.

6. Verfahren nach Anspruch 5, dadurch gekennzeichnet, daß der Wert des gewünschten dynamischen Prozeß-Ausgangsverlaufs am Abtastzeitpunkt k+r+1+λ gleich den Wert des Bezugsverlaufs an dem Abtastzeitpunkt k+r+1+λ ist.

7. Verfahren nach den Ansprüchen 3, 4, 5 oder 6, dadurch gekennzeichnet, daß der Bezugsverlauf periodisch als Funktion der vorher gemessenen Prozeß-Ausgänge neu definiert wird und sich entsprechend einer gewürschten Dynamik zum Sollwert entwickelt.

8. Verfahren nach den Ansprüchen 1, 2, 3, 4, 5, 6 oder 7, dadurch gekennzeichnet, daß der Schritt der Erzeugung des Steuervektors den Schritt der Erzeugung eines inkrementalen Steuervektors einschließt, der die inkrementale Änderung des Eingangsvektors des Prozesses darstellt, daß der inkrementale

20

Steuervektor der erste Vektor einer zukünftigen Folge vin inkrementalen Steuervektoren zwischen den Abtastzeitpunkten k und k+λ ist, von der das Modell voraussagt, daß sie eine inkrementale Änderung des dynamischen Prozeß-Ausgangsvektors derart hervorruft, daß der dynamische Prozeß-Ausgangsvektor an dem Abtastzeitpunkt k+r+1+λ gleich dem Wert des gewünschten dynamischen Prozeß-Ausgangsverlaufes an dem Abtastzeitpunkt k+r+1+λ ist.

9. Verfahren nach den Ansprüchen 1, 2, 3, 4, 5, 6 oder 6, gekennzeichnet durch den weiteren Schritt der periodischen Erneuerung der Parameter des Modells derart, daß die Differenz zwischen dem tatsächlichen dynamischen Prozeß-Ausgangsvektor am Abtastzeitpunkt k+r+1 und dem dynamischen Prozeß-Ausgangsvektor, von dem das Modell voraussagt, daß er sich zum Abtastzeitpunkt k+r+1 ergibt, auf Null verringert wird, und daß der Schritt der periodischen Erneuerung der Parameter des Modells die folgenden Schritte umfaßt:

(A) die periodische Erzeugung eines Abschätzvektors d (k) entsprechend des selbstanpassenden prädiktiven Modells ein seiner an einem vorhergehenden Abtastzeitpunkt erneuerten Form, wobei der Abschätzvektor entweder einen Ausgangsvektor, einen Steuervektor oder einen meßbaren Störvektor des gesteuerten Prozesses an einem vorgegebenen Abtastzeitpunkt darstellt,

(B) die periodische Erzeugung eines geschätzten Fehlervektors, der die Differenz zwischen dem Abschätzvektor an dem vorgegebenen Abtastzeitpunkt und dem tatsächlichen Wert des Vektors darstellt, der von dem Abschätzvektor an dem vorgegebenen Abtastzeitpunkt abgeschätzt wird und

(C) die periodische Modifikation der Parameter des Modells als Funktion des geschätzten Fehlervektors.

10. Verfahren nach Anspruch 8, gekennzeichnet durch den weiteren Schritt der periodischen Erneuerung der Parameter des Modells derart, daß die Differenz zwischen dem tatsächlichen dynamischen Prozeß-Ausgangsvektor am Abtastzeitpunkt k+r+1 und dem dynamischen Prozeß-Ausgangsvektor, von dem das Modell voraussagt, daß er sich an dem Abtastzeitpunkt k+r+1 ergibt, auf Null verringert wird, wobei der Schritt der periodischen Erneuerung der Parameter des Modells die folgenden Schritte umfaßt:

(A) die periodische Erzeugung eines Abschätzvektors d (k) entsprechend des selbstanpassenden prädiktiven Modells gemäß seiner Erneuerung an einem vorhergehenden Abtastzeitpunkt, wobei der Abschätzvektor entweder einen Ausgangsvektor, einen Steuervektor oder einen meßbaren Störvektor des gesteuerten Prozesses an einem vorgegebenen Abtastzeitpunkt darstellt,

(B) die periodische Erzeugung eines Abschätz-Fehlervektors, der die Differenz zwischen dem Abschätzvektor an dem vorgegebenen Abtastzeitpunkt und dem tatsächlichen Wert des Vektors gemäß Abschätzung durch den Abschätzvektor an dem vorgegebenen Abtastzeitpunkt darstellt, und

(C) die periodische Modifikation der Parameter des Modells als eine Funktion des abgeschätzten Fehlervektors.

11. Verfahren nach Anspruch 10, gekennzeichnet durch den weiteren Schritt der Erzeugung eines inkrementalen Vektors, der die Differenz zwischen dem tatsächlichen Wert eines der Steuer-, Ausgangs- oder meßbaren Stör-Vektoren zu dem vorgegebenen Abtastzeitpunkt und dem tatsächlichen Wert von dem einen der Steuer-Ausgangs- oder meßbaren Störvektoren an einem frühren Abtastzeitpunkt anzeigt, worin der Abschätzvektor der Wert des inkrementalen Vektors ist, der von dem Modell gemäß Erneuerung an dem vorhergehenden Abtastzeitpunkt abgeschätzt ist, und worin der Schritt der Erzeugung eines abgeschätzten Fehlervektors den Schritt der Bestimmung der Differenz zwischen dem Wert des inkrementalen Vektors und dem Wert des Abschätzvektors umfaßt.

12. System zur Erzeugung eines Steuervektors während jedes einer Vielzahl von Abtastzeitpunkten k, bei dem der Steuervektor einer Vorrichtung zuzuführen ist, die einen Prozeß ausführt, der zumindestens eine Eingangsvariable und zumindestens eine Ausgangsvariable aufweist, wobei zumindestens eine der Eingangsvariablen einen Prozeß-Eingangsvektor definiert und die Vorrichtung den Prozeß-Eingangsvektor in Abhängigkeit von dem Wert des Steuervektors ändert, wobei das System Einrichtungen zur Speicherung eines Modells, das den dynamischen Wert eines Prozeß-Ausgangsvektors vorhersagen kann, der aus zumindestens einem der Prozeß-Ausgangsvariablen an vorgegebenen zukünftigen Abtastzeitpunkten zusammengesetzt ist, und Einrichtungen umfaßt, die einen gewünschten Prozeß-Ausgangsvektor an jedem der Abtastzeitpunkte k erzeugen, wobei der gewünschte dynamische Prozeß-Ausgangsvektor einen gewünschten Wert des Prozeß-Ausgangsvektors an den vorgegebenen zukünftigen Abtastzeitpunkten k+r+1 darstellt, worin r die Anzahl der Abtastzeitverzögerungen ist, die der Prozeß benötigt, um auf eine Änderung des Prozeß-Eingangsvektors anzusprechen, und die an jedem der Abtastzeitpunkte k den Steuervektor erzeugen, von dem das Modell voraussagt, daß er bewirkt, daß der dynamische Prozeß-Ausgangsvektor gleich dem gewünschten dynamischen Prozeß-Ausgangsvektor an dem zukünftigen Abtastzeitpunkt k+r+1 ist, dadurch gekennzeichnet, daß das Modell Daten zur Vorhersage des Verlaufs des dynamischen Prozeß-Ausgangsvektors zwischen dem zukünftigen Abtastzeitpunkt k+r+1 und einem weiteren zukünftigen Abtastzeitpunkt k+r+1+λ, worin λ eine positive ganze Zahl ist, als Funktion einer zukünftigen Folge des Steuervektors zwischen den Abtastzeitpunkten k und k+λ umfaßt, daß das System Einrichtungen umfaßt, die an jedem der Abtastzeitpunkte k einen gewünschten dynamischen Prozeß-Ausgangsverlauf zwischen den Abtastzeitpunkten k+r+1 und k+r+1+λ auswählen und daß die Generatoreinrichtungen an jedem der Abtastzeitpunkte k einen Steuervektor erzeugen, der der erste Vektor einer zukünftigen Folge von Steuervektorn zwischen den Abtastzeitpunkten k und k+λ ist, die bewirkt, daß der Wert des vorhergesagten Verlaufs der dynamischen Prozeß-Ausgangsvektoren am Abtastzeitpunkt

21

k+r+1+λ gleich dem Wert des gewünschten dynamischen Prozeß-Ausgangsverlaufs an dem Abtastzeitpunkt k+r+1+λ ist.

13. System nach Anspruch 12, dadurch gekennzeichnet, daß der gewünschte dynamische Prozeß-Ausgangsverlauf gleich einem speziellen Prozeß-Ausgangsverlauf zwischen den Abtastzeitpunkten k+r+1 und k+r+1+λ ist, von dem das Modell voraussagt, daß er durch die zukünftige Folge von Steuervektoren zwischen den Abtastzeitpunkten k und k+λ hervorgerufen würde, so daß der spezielle Prozeß-Ausgangsverlauf und die zukünftige Steuerfolge ein gewähltes Verhaltenskriterium optimieren, das durch einen Index definiert ist, der einen ersten Satz von Bewertungsmatrizen, die dem Satz von dynamischen Prozeß-Ausgangsvektoren entsprechen, die in dem von dem Modell vorausgesagten Prozeß-Ausgangsverlauf eingeschlossen sind, und einen zweiten Satz von Bewertungsmatrizen einschließt, die dem Satz von Steuervektoren entsprechen, die in der Folge der Steuervektoren eingeschlossen sind, von der das Modell voraussagt, daß sie den Prozeß-Ausgangsverlauf hervorrufen, und daß die Bewertungsmatrizen derart ausgewählt sind, daß der Index minimiert werden kann, ohne daß die Lösung einer Ricatti-Gleichung erforderlich ist.

14. System nach Anspruch 13, dadurch gekennzeichnet, daß die Optimierung des gewählten Verhaltenskriteriums durch Minimieren des Wertes des Index erzielt wird, und daß sich der Index als Funktion eines Bezugsverlaufs der Prozeß-Ausgangsvektoren und/oder als Funktion eines Sollwertes des Prozesses, und/oder als Funktion von vorher gemessenen Prozeß-Ausgangs- und Steuervektorfolgen und/oder als Funktion von Beschränkungen hinsichtlich der zulässigen Werte des Steuervektors und/oder als Funktion irgendwelcher anderer Parameter oder Variablen ändert, die das Steuerverhalten des Prozesses beeinflussen.

15. System nach Anspruch 14, dadurch gekennzeichnet, daß sich der Index als Funktion der Differenz zwischen den Werten des Prozeß-Ausgangsvektor-Verlaufs, der von dem selbstanpassenden prädiktiven Modell vorausgesagt wird, und den Werten des Bezugsverlaufs ändert und außerdem eine Funktion der inkrementalen Werte der Steuervektorfolge ist, von der das selbstanpassende prädiktive Modell voraussagt, daß sie die Werte des Prozeß-Ausgangsvektor-Verlaufes erzeugt.

16. System nach Anspruch 15, dadurch gekennzeichnet, daß die Minimierung des Index erzielt wird, wenn die zukünftige spezielle Steuerfolge als konstant von dem Zeitpunkt k zum Zeitpunkt k+λ angenommen wird.

17. System nach Anspruch 16, dadurch gekennzeichnet, daß der Wert des gewünschten dynamischen Prozeß-Ausgangs-Verlaufs am Abtastzeitpunkt k+r+1+λ gleich dem Wert des Bezugsverlaufs an dem Abtastzeitpunkt k+r+1+λ ist.

18. System nach den Ansprüchen 14, 15, 16 oder 17, dadurch gekennzeichnet, daß der Bezugsverlauf periodisch als eine Funktion der vorher gemessenen Prozeß-Ausgänge neu definiert wird und sich entsprechend einer gewünschten Dynamik zum Sollwert entwickelt.

19. System nach den Ansprüchen 12, 13, 14, 15, 16, 17 oder 18, dadurch gekennzeichnet, daß die Einrichtungen zur Erzeugung des Steuervektors Einrichtungen zur Erzeugung eines inkrementalen Steuervektors einschließen, der die inkrementale Änderung des Eingangsvektors des Prozesses darstellt, wobei der inkrementale Steuervektor der erste Vektor einer zukünftigen Folge von inkrementalen Steuervektoren zwischen den Abtastzeitpunkten k und k+λ ist, von der das Modell voraussagt, daß sie eine inkrementale Änderung des dynamischen Prozeß-Ausgangsvektors derart hervorruft, daß der dynamische Prozeß-Ausgangsvektor an dem Abtastzeitpunkt k+r+1+λ gleich dem Wert des gewünschten dynamischen Prozeß-Ausgangsverlaufs an dem Abtastzeitpunkt k+r+1+λ ist.

20. System nach den Ansprüche 12, 13, 14, 15, 16, 17 oder 18, dadurch gekennzeichnet, daß es weiterhin Einrichtungen zur periodischen Erneuerung der Parameter des Modells derart einschließt, daß die Differenz zwischen dem tatsächlichen dynamischen Prozeß-Ausgangsvektor am Abtastzeitpunkt k+r+1 und dem dynamischen Prozeß-Ausgangsvektor, von dem das Modell voraussagt, daß er sich zum Abtastzeitpunkt k+r+1 ergeben würde, in Richtung auf Null verringert wird, und daß die Erneuerungseinrichtungen die Parameter des Modells durch folgende Schritte erneuern:

(A) die periodische Erzeugung eines Abschätzvektors d (k) entsprechend des selbstanpassenden prädiktiven Modells gemäß seiner Erneuerung an einem vorhergehenden Abtastzeitpunkt, wobei der Abschätzvektor entweder einen Ausgangsvektor, einen Steuervektor oder einen meßbaren Störvektor des gesteuerten Prozesses an einem vorgegebenen Abtastzeitpunkt darstellt,

(B) die periodische Erzeugung eines abgeschätzten Fehlervektors, der die Differenz zwischen dem Abschätzvektor zu dem vorgegebenen Abtastzeitpunkt und dem tatsächlichen Wert des Vektors darstellt, der von dem Abschätzvektor an dem vorgegebenen Abtastzeitpunkt abgeschätzt wird, und

(C) die periodische Modifikation der Parameter des Modells als eine Funktion des abgeschätzten Fehlervektors.

21. System nach Anspruch 19, dadurch gekennzeichnet, daß es weiterhin Einrichtungen zur periodischen Erneuerung der Parameter des Modells derart aufweist, daß die Differenz zwischen dem tatsächlichen dynamischen Prozeß-Ausgangsvektor am Abtastzeitpunkt k+r+1 und dem dynamischen Prozeß-Ausgangsvektor, von dem das Modell voraussagt, daß er sich zu dem Abtastzeitpunkt k+r+1 ergeben würde, in Richtung auf Null verringert wird, und daß die Erneuerungseinrichtungen die Parameter des Modells durch folgende Schritte erneuern:

(A) die periodische Erzeugung eines Abschätzvektors d (k) entsprechend des selbstanpassenden

22

prädiktiven Modells gemäß seiner Erneuerung an einem vorhergehenden Abtastzeitpunkt, wobei der Abschätzvektor entweder einen Ausgangsvektor, einen Steuervektor oder einen meßbaren Störvektor des gesteuerten Prozesses an einem vorgegebenen Abtastzeitpunkt darstellt,

(B) die periodische Erzeugung eines Abschätz-Fehlervektors, der die Differenz zwischen dem Abschätzvektor an dem vorgegebenen Abtastzeitpunkt und dem tatsächlichen Wert des Vektors darstellt, der von dem Abschätzvektor an dem vorgegebenen Abtastzeitpunkt abgeschätzt wird, und

(C) die periodische Modification der Parameter des Modells als Funktion des Abschätz-Fehlervektors.

22. System nach Anspruch 21, dadurch gekennzeichnet, daß es weiterhin Einrichtungen zur Erzeugung eines inkrementalen Vektors einschließt, der die Differenz zwischen dem tatsächlichen Wert eines der Steuer-, Ausgangs- oder meßbaren Störvektoren an dem vorgegebenen Abtastzeitpunkt und dem tatsächlichen Wert dieses einen der Steuer-, Ausgangs- oder meßbaren Störvektoren an einem früheren Abtastzeitpunkt darstellt, und worin der Abschätzvektor der Wert des inkrementalen Vektors, der von dem Modell gemäß seiner Erneuerung an dem früheren Abtastzeitpunkt abgeschätzt wird, und worin die Einrichtungen zur periodischen Erneuerung der Parameter des Modells den Abschätz-Fehlervektor dadurch erzeugen, daß die Differenz zwischen dem Wert des inkrementalen Vektors und dem Wert des Abschätzvektors bestimmt wird.

## Revendications

1. Procédé de production d'un vecteur de commande au cours de chaun de plusieurs instants d'échantillonage $k$, ledit vecteur de commande devant être appliqué à un appareil qui effectue un procédé possédant au moins une variable d'entrée et au moins une variable de sortie, au moins l'une desdites variables d'entrée définissant un vecteur d'entrée du processus, ledit appareil faisant varier ledit vecteur d'entrée du processus en fonction de la valeur dudit vecteur de commande, ledit procédé comprenant les opérations qui consistent à emmagasiner un modèle qui est en mesure de prédire la valeur dynamique d'un vecteur de sortie du processus, lequel vecteur est constitué d'au moins une desdites variables de sortie du processus à des instants d'échantillonnage futurs prédéterminés, à produire un vecteur de sortie du processes voulu à chacun desdits instants d'échantillonnage $k$, ledit vecteur de sortie du processus dynamique voulu étant représentatif d'une valeur voulue dudit vecteur de sortie du processus auxdits instants d'échantillonnage futurs prédéterminés $k+r+1$, $r$ étant le nombre de retards temporels d'échantillonnage qu'il faut au processus pour répondre à une variation du vecteur d'entrée du processus, et à produire à chacun desdits instants d'échantillonnage $k$ le vecteur de commande que ledit modèle prédit comme amenant ledit vecteur de sortie du processus dynamique à être égal audit vecteur de sortie du processus dynamique voulu audit instant d'échantillonnage futur $k+r+1$, caractérisé en ce que le modèle comprend des données permettant de prédire la trajectoire du vecteur de sortie du processus dynamique entre ledit instant d'échantillonnage futur $k+r+1$ et un instant d'échantillonnage plus éloigné dans le futur $k+r+1+\lambda$, $\lambda$ étant un entier positif, en fonction d'une séquence future desdits vecteurs de commande d'entre des instants d'échantillonnage $k$ et $k+\lambda$, en ce que, à chacun desdits instants d'échantillonnage $k$, il est choisi une trajectoire de sortie du processus dynamique voulu entre les instants d'échantillonnage $k+r+1$ et $k+r+1+\lambda$, et en ce que le vecteur de commande qui est produit à chacun desdits instants d'échantillonnage $k$ est le premier vecteur d'une séquence future de vecteurs de commande d'entre les instants d'échantillonnage $k$ et $k+\lambda$, ce qui amène la valeur de ladite trajectroire prédite des vecteurs de sortie du processus dynamiques pour l'instant d'échantillonnage $k+r+1+\lambda$ à être égale à la valeur de ladite trajectoire de sortie du processus dynamique voulue pour ledit instant d'échantillonnage $k+r+1+\lambda$.

2. Procédé selon la revendication 1, où ladite trajectoire de sortie du processus dynamique voulue est égale à la trajectoire de sortie du processus particulière d'entre les instants d'échantillonnage $k+r+1$ et $k+r+1+\lambda$ que ledit modèle prédit comme devant être amenée par ladite séquence future de vecteurs de commande d'entre les instants d'échantillonnage $k$ et $k+\lambda$, et telle que ladite trajectoire de sortie du processus particulière et ladite séquence de commande future optimisent un critère de fonctionnement choisi défini par un indice qui contient une premier ensemble de matrices de pondération correspondant à l'ensemble de vecteurs de sortie du processus dynamiques inclus dans la trajectoire de sortie du processus prédite par ledit modèle et un deuxième ensemble de matrices de pondération correspondant à l'ensemble des vecteurs de commande inclus dans la séquence de vecteurs de commande que ledit modèle prédit comme amenant ladite trajectoire de sortie du processus, lesdites matrices de pondération étant choisies de façon que ledit indice puisse être minimisé sans que ceci demande la résolution d'une équation de Ricatti.

3. Procédé selon la revendication 2, où on obtient l'optimisation dudit critère de fonctionnement choisi en minimisant la valeur dudit indice, ledit indice variant en fonction d'au moins un vecteur d'une trajectoire de référence de vecteurs de sortie du processus, un point fixé dudit processus, des vecteurs de sortie et de commande du processus préalablement mesurés, des contraintes s'exerçant sur la valeur admissible pour lesdits vecteurs de commande et tout autre paramètre ou variable influençant la commande dudit processus.

4. Procédé selon la revendication 3, où ledit indice variant en fonction de la différence entre les valeurs de la trajectoire de vecteurs de sortie du processus prédite par ledit modèle adaptatif-prédictif et les valeurs

**0 037 579**

de ladite trajectoire de référence, ainsi qu'en fonction des valeurs d'accroissement élémentaire de la séquence de vecteurs de commande que ledit modèle prédit comme produisant lesdites valeurs de ladite trajectoire de vecteurs de sortie du processus.

5. Procédé selon la revendication 4, où on obtient la minimisation dudit indice lorsque l'on suppose constante ladite séquence de commande particulière future entre l'instant $k$ et l'instant k+.

6. Procédé selon la revendication 5, où la valeur de ladite trajectoire de sortie du processus dynamique voulue pour l'instant d'échantillonnage k+r+1+λ est égale à la valeur de ladite trajectoire de référence pour ledit instant d'échantillonnage k+r+1+λ.

7. Procédé selon l'une quelconque des revendications 3, 4, 5 et 6, où ladite trajectoire de référence est périodiquement redéfinie en fonction des sorties du processus préalablement mesurées et évolue en fonction des dynamiques voulues pour le point fixé.

8. Procédé selon l'une quelconque des revendications 1 à 7, où ladite opération consistant à produire ledit vecteur de commande comporte l'opération de production d'un vecteur de commande d'accroissement élémentaire, représentant la variation d'accroissement élémentaire du vecteur d'entrée dudit processus, ledit vecteur de commande d'accroissement élémentaire étant le premier vecteur d'une séquence future de vecteurs de commande d'accroissement élémentaire d'entre les instants d'échantillonnage $k$ et k+λ, que ledit modèle prédit comme amenant une variation d'accroissement élémentaire dudit vecteur de sortie du processus dynamique de façon que ledit vecteur de sortie du processus dynamique pour ledit instant d'échantillonnage k+r+1+λ soit égal à la valeur de ladite trajectoire de sortie du processus dynamique voulue pour ledit instant d'échantillonnage k+r+1+λ.

9. Procédé selon l'une quelconque des revendications 1 à 7, comprenant en outre l'opération qui consiste à remettre à jour périodiquement les paramètres dudit modèle de telle manière que la différence entre le vecteur de sortie du processus dynamique réel pour l'instant d'échantillonnage k+r+1 et le vecteur de sortie du processus dynamique que ledit modèle prédit comme résultant audit instant d'échantillonnage k+r+1 soit ramenée vers 0, ladite opération de remise à jour périodique des paramètres dudit modèle comportant les opérations suivantes:

(A) produire périodiquement, en fonction dudit modèle adaptif-prédictif tel que remis à jour à un instant d'échantillonnage antérieur, un vecteur d'estimation d(k) représentatif d'un vecteur de sortie, d'un vecteur de commande ou bien d'un vecteur de perturbations mesurables dudit processus commandé à un instant d'échantillonnage donné;

(B) produire périodiquement un vecteur d'erreur estimée représentatif de la différence entre ledit vecteur d'estimation dudit instant d'échantillonnage donné et la valeur réelle du vecteur estimée par ledit vecteur d'estimation audit instant d'échantillonnage donné; et

(C) modifier périodiquement les paramètres dudit modèle en fonction dudit vecteur d'erreur estimée.

10. Procédé selon la revendication 8, comprenant en outre l'opération qui consiste à remettre périodiquement à jour les paramètres dudit modèle de telle façon que la différence entre le vecteur de sortie du processus dynamique réel pour l'instant d'échantillonnage k+r+1 et le vecteur de sortie du processus dynamique que ledit modèle prédit comme résultant audit instant d'échantillonnage k+r+1 soit ramenée vers 0, ladite opération de remise à jour périodique des paramètres dudit modèle comportant les opérations suivantes:

(A) produire périodiquement, en fonction dudit modèle adaptatif-prédictif tel qu'il a été remis à jour à un instant d'échantillonnage antérieur, un vecteur d'estimation d(k) représentant un vecteur de sortie, un vecteur de commande ou un vecteur de perturbations mesurables dudit processus commandé à un instant d'échantillonnage donné;

(B) produire périodiquement un vecteur d'erreur estimée représentatif de la différence entre ledit vecteur d'estimation pour ledit instant d'échantillonnage donné et la valeur réelle du vecteur estimé par ledit vecteur d'estimation audit instant d'échantillonnage donné; et

(C) modifier périodiquement les paramètres dudit modèle en fonction dudit vecteur d'erreur estimée.

11. Procécé selon la revendication 10, comportant en outre l'opération qui consiste à produire un vecteur d'accroissement élémentaire indiquant la différence entre la valeur réelle du vecteur considéré parmi lesdits vecteurs de commande, de sortie ou de perturbations mesurables pour ledit instant d'échantillonnage donné et la valeur réelle du vecteur considéré parmi lesdits vecteurs de commande, de sortie ou de perturbations mesurables pour un instant d'échantillonnage antérieur; où ledit vecteur d'estimation est la valeur dudit vecteur d'accroissement élémentaire estimée par ledit modèle tel qu'il a été remis à jour audit instant d'échantillonnage antérieur; et où ladite opération consistant à produire un vecteur d'erreur estimée comprend l'opération de détermination de la différence entre la valeur dudit vecteur d'accroissement élémentaire et la valeur dudit vecteur d'estimation.

12. Système permettant de produire un vecteur de commande au cours de chacun de plusieurs instants d'échantillonnage $k$, ledit vecteur de commande devant être appliqué à un appareil qui effectue un processus ayant au moins une variable d'entrée et au moins une variable de sortie, au moins une desdites variables d'entrée définissant un vecteur d'entrée du processus, ledit appareil faisant varier ledit vecteur d'entrée du processus en fonction de la valeur dudit vecteur de commande, ledit système comprenant un moyen permettant d'emmagasiner un modèle qui est en mesure de prédire la valeur dynamique d'un vecteur de sortie du processus, lequel vecteur est constitué d'au moins une desdites variables de sortie du processus pour des instants d'échantillonnage futurs prédéterminés, et un moyen permettant de produire

24

# 0 037 579

un vecteur de sortie du processus voulu à chacun desdits instants d'échantillonnage $k$, ledit vecteur de sortie du processus dynamique voulu étant représentatif d'une valeur voulue dudit vecteur de sortie du processus pour lesdits instants d'échantillonnage futurs prédéterminés $k+r+1$, $r$ étant le nombre de retards temporels d'échantillonnage qu'il faut au processus pour répondre à une variation du vecteur d'entrée du processus, et de produire à chacun desdits instants d'échantillonnage $k$ le vecteur de commande que ledit modèle prédit comme amenant le vecteur de sortie du processus dynamique à être égal audit vecteur de sortie du processus dynamique voulu pour ledit instant d'échantillonnage futur $k+r+1$, caractérisé en ce que le modèle comprend des données permettant de prédire la trajectoire du vecteur de sortie du processus dynamique entre ledit instant d'échantillonnage futur $k+r+1$ et un instant d'échantillonnage plus éloigné dans le futur $k+r+1+\lambda$, $\lambda$ étant un entier positif, en fonction d'une séquence future dudit vecteur de commande entre les instants d'échantillonnage $k$ et $k+\lambda$, en ce que ledit système comprenant un moyen permettant de sélectionner, à chacun desdits instants d'échantillonnage $k$, une trajectoire de sortie du processus dynamique voulue entre les instants d'échantillonnage $k+r+1$ et $k+r+1+\lambda$, et en ce que ledit moyen de production produit à chacun desdits instants d'échantillonnage $k$ un vecteur de commande qui est le premier vecteur d'une séquence future de vecteurs de commande d'entre les instants d'échantillonnage $k$ et $k+\lambda$, qui amène la valeur de ladite trajectoire prédite des vecteurs de sortie du processus dynamiques pour l'instant d'échantillonnage $k+r+1+\lambda$ à être égale à la valeur de ladite trajectoire de sortie du processus dynamique voulue pour ledit instant d'échantillonnage $k+r+1+\lambda$.

13. Système selon la revendication 12, où ladite trajectoire de sortie du processus dynamique voulue est égale à une trajectoire de sortie du processus particulière d'entre les instants d'échantillonnage $k+r+1$ et $k+r+1+\lambda$ que ledit modèle prédit comme étant amenée par ladite séquence future de vecteurs de commande d'entre les instants d'échantillonnage $k$ et $k+\lambda$, et telle que ladite trajectoire de sortie du processus particulière et ladite séquence de commande future optimisent un critère de fonctionnement choisi qui est défini par un indice comportant un premier ensemble de matrices de pondération correspondant à l'ensemble de vecteurs de sortie du processus dynamiques inclus dans la trajectoire de sortie du processus prédite par ledit modèle et un deuxième ensemble de matrices de pondération correspondant à l'ensemble des vecteurs de commande inclus dans la séquence de vecteurs de commande que ledit modèle prédit comme amenant ladite trajectoire de sortie du processus, lesdites matrices de pondération étant choisies de façon que ledit indice puisse être minimisé sans que ceci nécessite la résolution d'une équation de Ricatti.

14. Système selon la revendication 13, où l'optimisation dudit critère de fonctionnement choisi est obtenu par minimisation de la valeur dudit indice, ledit indice variant en fonction d'au moins une trajectoire de référence de vecteurs de sortie du processus, un point fixé dudit processus, des séquences de vecteurs de sortie et de commande du processus préalablement mesurés, des contraintes s'exerçant sur les valeurs admissibles dudit vecteur de commande et tout autre paramètre ou variable influençant la commande dudit processus.

15. Système selon la revendication 14, où ledit indice varie en fonction de la différence entre les valeurs de la trajectoire de vecteurs de sortie du processus prédite par ledit modèle adaptatif-prédictif et les valeurs de ladite trajectoire de référence et est également une fonction des valeurs d'accroissement élémentaire de la séquence de vecteurs de commande que ledit modèle adaptatif-prédictif prédit comme produisant lesdites valeurs de ladite trajectoire de vecteurs de sortie du processus.

16. Système selon la revendication 15, où la minimisation dudit indice est obtenue lorsque ladite séquence de commande particulière future est supposée constante entre l'instant $k$ et l'instant $k+\lambda$.

17. Système selon la revendication 16, où la valeur de ladite trajectoire de sortie du processus dynamique voulue pour l'instant d'échantillonnage $k+r+1+\lambda$ est égale à la valeur de ladite trajectoire de référence pour ledit instant d'échantillonnage $k+r+1+\lambda$.

18. Système selon l'une quelconque des revendications 14 à 17, où ladite trajectoire de référence est périodiquement redéfinie en fonction des sorties du processus préalablement mesurées et évolue en fonction des dynamiques voulues vers le point fixé.

19. Système selon l'une quelconque des revendications 12 à 18, où ledit moyen de production dudit vecteur de commande comporte un moyen permettant de produire un vecteur de commande d'accroissement élémentaire représentatif de la variation d'accroissement élémentaire du vecteur d'entrée dudit processus, le vecteur de commande d'accroissement élémentaire étant le premier vecteur d'une séquence future de vecteurs de commande d'accroissement élémentaire d'entre les instants d'échantillonnage $k$ et $k+\lambda$ que ledit modèle prédit comme produisant une variation d'accroissement élémentaire dudit vecteur de sortie du processus dynamique telle que ledit vecteur de sortie du processus dynamique pour ledit instant d'échantillonnage $k+r+1+\lambda$ soit égal à la valeur de ladite trajectoire de sortie du processus dynamique voulue pour ledit instant d'échantillonnage $k+r+1+\lambda$.

20. Système selon l'une quelconque des revendications 12 à 18, comprenant en outre un moyen qui permet de remettre périodiquement à jour les paramètres dudit modèle de telle manière que la différence entre le vecteur de sortie du processus dynamique réel pour l'instant d'échantillonnage $k+r+1$ et le vecteur de sortie du processus dynamique que ledit modèle prédit comme résultant audit instant d'échantillonnage $k+r+1$ soit ramenée vers 0, ledit moyen de remise à jour remettant à jour les paramètres dudit modèle en:

(A) produisant périodiquement, en fonction dudit modèle adaptif-prédictif tel que remis à jour à un instant d'échantillonnage antérieur, un vecteur d'estimation d(k) représentant un vecteur de sortie, un

25

vecteur de commande ou un vecteur de perturbations mesurables dudit processus commandé à un instant d'échantillonnage donnée;

(B) produisant périodiquement un vecteur d'erreur estimée représentatif de la différence entre ledit vecteur d'estimation pour ledit instant d'échantillonnage donnée et la valeur réelle dudit vecteur estimé par ledit vecteur d'estimation audit instant d'échantillonnage donné; et

(C) modifiant périodiquement les paramètres dudit modèle en fonction dudit vecteur d'erreur estimée.

21. Système selon la revendication 19, comprenant en outre un moyen qui permet de remettre périodiquement à jour les paramètres dudit modèle de telle façon que la différence entre le vecteur de sortie du processus dynamique réel pour l'instant d'échantillonnage k+r+1 et le vecteur de sortie du processus dynamique que ledit modèle prédit comme résultant audit instant d'échantillonnage k+r+1 soit ramenée vers 0, ledit moyen de remise à jour remettant à jour les paramètres dudit modèle en:

(A) produisant périodiquement, en fonction dudit modèle adaptatif-prédictif tel que remis à jour à un instant d'échantillonnage antérieur, un vecteur d'estimation d(k) représentant un vecteur de sortie, un vecteur de commande ou un vecteur de perturbations mesurables dudit processus commandé à un instant d'échantillonnage donné;

(B) produisant périodiquement un vecteur d'erreur estimée représentatif de la différence entre ledit vecteur d'estimation pour ledit instant d'échantillonnage donné et la valeur réelle dudit vecteur estimé par ledit vecteur d'estimation pour ledit instant d'échantillonnage donné; et

(C) modifiant périodiquement les paramètres dudit modèle en fonction dudit vecteur d'erreur estimée.

22. Système selon la revendication 21, comportant en outre un moyen permettant de produire un vecteur d'accroissement élémentaire qui est indicatif de la différence entre la valeur réelle du vecteur considéré parmi lesdits vecteurs de commande, de sortie ou de perturbations mesurables dudit instant d'échantillonnage donné et la valeur réelle dudit vecteur considéré parmi lesdits vecteurs de commande, de sortie ou de perturbations mesurables pour un instant d'échantillonnage antérieur; et où:

ledit vecteur d'estimation est la valeur estimée par ledit modèle, tel que remis à jour à un instant d'échantillonnage antérieur, dudit vecteur d'accroissement élémentaire; et

ledit moyen de remise à jour périodique des paramètres dudit modèle produit ledit vecteur d'erreur estimée an déterminant la différence entre la valeur dudit vecteur d'accroissement élémentaire et la valeur dudit vecteur d'estimation.

# FIG. I

0 037 579

FIG.2

F I G . 3

FIG.4

FIG. 5

0 037 579

5